(19) Europäisches Patentamt
European Patent Office
Office européen des brevets

(11) EP 3 395 570 B1

(12) EUROPEAN PATENT SPECIFICATION

(45) Date of publication and mention of the grant of the patent:
**04.08.2021 Bulletin 2021/31**

(21) Application number: **16878669.7**

(22) Date of filing: **20.12.2016**

(51) Int Cl.:
***B32B 27/40*** (2006.01) ***B32B 27/26*** (2006.01)
***B32B 27/28*** (2006.01) ***C09D 11/102*** (2014.01)
***C09D 11/107*** (2014.01) ***C09J 11/04*** (2006.01)
***C09J 175/04*** (2006.01) ***B32B 27/08*** (2006.01)
***B32B 27/30*** (2006.01) ***B32B 27/32*** (2006.01)
***B32B 27/34*** (2006.01) ***B32B 27/36*** (2006.01)
***B32B 27/16*** (2006.01) ***C09D 11/03*** (2014.01)
***C09D 11/106*** (2014.01) ***C08G 18/76*** (2006.01)
***C08G 18/42*** (2006.01) ***C09J 175/06*** (2006.01)

(86) International application number:
**PCT/JP2016/087888**

(87) International publication number:
**WO 2017/110780 (29.06.2017 Gazette 2017/26)**

# (54) LAMINATE AND METHOD FOR MANUFACTURING LAMINATE

LAMINAT UND VERFAHREN ZUR HERSTELLUNG EINES LAMINATS

STRATIFIÉ ET PROCÉDÉ POUR FABRIQUER UN STRATIFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2015 JP 2015248552**

(43) Date of publication of application:
**31.10.2018 Bulletin 2018/44**

(73) Proprietor: **DIC Corporation**
**Tokyo 174-8520 (JP)**

(72) Inventors:
- **ARAI, Masamitsu**
**Tokyo 174-8520 (JP)**
- **SHIMOGUCHI, Mutsuhiro**
**Tokyo 174-8520 (JP)**

(74) Representative: **Beckmann, Claus**
**Kraus & Weisert**
**Patentanwälte PartGmbB**
**Thomas-Wimmer-Ring 15**
**80539 München (DE)**

(56) References cited:
**EP-A1- 2 749 621** **JP-A- H02 158 339**
**JP-A- 2001 270 026** **JP-A- 2001 270 026**
**JP-A- 2002 018 994** **JP-A- 2003 064 342**
**JP-A- 2006 205 431** **JP-A- 2013 071 255**
**JP-A- 2015 016 657** **JP-A- 2015 016 657**
**JP-A- 2015 137 138** **JP-A- 2015 137 138**
**US-A- 5 601 929** **US-A1- 2010 247 876**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a laminate and a method for manufacturing a laminate.

Background Art

It is necessary that a packaging material used for packaging food or daily necessities has certain strength, cracking resistance, or gas barrier properties, in order to protect contents from an impact received during a distribution process or a deterioration or the like due to oxygen or moisture. In a case of performing a heat sterilization process with respect to the contents, it is necessary to obtain retort resistance, heat resistance, and the like, and transparency may also be required so that the contents can be checked. However, it is difficult to satisfy the necessary functions with one material. For example, a non-stretched polyolefin film used in a case of sealing performed with heat seal has insufficient oxygen barrier properties, whereas excellent heat processing properties are obtained. In contrast, a nylon film has excellent gas barrier properties but has deteriorated heat sealing properties.

Accordingly, a laminate obtained by bonding different kinds of polymer materials to each other is widely used as a packaging material. As an example, a laminate that has a structure of an outer layer/printing layer/adhesive layer (adhesive)/inner layer by performing printing on a thermoplastic film that is an outer layer and has a product protecting function such as impact resistance or gas barrier properties, and performing bonding with a thermoplastic film that is an inner layer and has a sealant function by using an adhesive, as described in PTLs 1 and 2, has been known. As the adhesive used for such a laminate, a two-component polyurethane-based adhesive formed of polyol and isocyanate has been known.

Meanwhile, printing ink is applied to a front side or a rear side of the packaging material, or, a laminate inner side, in a case of a material of a multi-laminated composite film, in order to display contents of packaged materials, protect packaging materials, or for decoration. In a case of packaging materials for obtaining gas barrier properties, separate printing layers are provided by using a film having gas barrier properties or an adhesive as described above in most of the packaging materials (for example, see PTL 3). However, the printing layer and the adhesive layer are compatible with each other, and thus, desired gas barrier properties may not be obtained, depending on the situation.

JP 2001 270026 A relates to the problem to provide a transparent barrier packaging material not having an environmental problem regarding waste and not having a decrease in an adhesive strength due to its aging, and a packaging bag having excellent bag breaking strength and tearability by using the barrier packaging material. As a solution to the problem, the document describes a transparent barrier packaging material which comprises a ceramic vapor-deposited film having a vapor-deposited layer made of an inorganic oxide and provided on a film base material, and a sealant layer laminated on a surface of the vapor-deposited layer of the film via an adhesive layer made of an adhesive or an anchor coating agent. In this case, a close contact medium layer made of any of a urethane resin, a vinyl chloride-vinyl acetate copolymer resin and a mixture of the urethane resin and the vinyl chloride-vinyl acetate copolymer resin is provided between the surface of the layer and the layer.

JP 2015 137138 A relates to the problem to provide an ultraviolet screening packaging material in which odor of a dilution solvent is not transferred to a content of the packaging material, because the odor moves to only outside of the packaging material, because the dilution solvent of an adhesive such as a urethane adhesive used in a step for forming a laminate midway through production is used, and the dilution solvent of the adhesive such as a urethane adhesive is not absorbed in an ultraviolet cutting layer when being used for a step for forming an adhesive layer and sealant layer on the laminate, and remaining solvent is not reduced. As a solution to the problem, the document describes an ultraviolet screening packaging material formed by laminating in the order of an ultraviolet cutting layer, gas barrier layer, adhesive agent layer, and sealant layer on a base material, and an ultraviolet screening packaging bag formed by sealing the sealant layer of the material.

JP 2015 016657 A relates to the problem to provide a gas barrier material which effectively exhibits a gas barrier function due to fillers by efficiently arranging fillers incorporated in an adhesive layer for lamination of a multilayer film in almost parallel with the film. As a solution to the problem, the document describes a gas barrier multilayer film in which the average value of the maximum length of a flat surface of a plate-like inorganic compound and the average value of a width of a short piece of the plate-like inorganic compound satisfy specific expressions.

EP 2 749 621 A1 relates to the problem to provide a resin composition for adhesives, the resin composition mainly containing a resin that has a good adhesive strength or a good oxygen-barrier property, and an adhesive obtained by applying the resin composition onto a film. As a solution to the problem, the document describes a resin composition for adhesives, the resin composition containing (A) a resin that has, as functional groups, two or more hydroxyl groups per molecule, (B) an isocyanate compound that has, as functional groups, two or more isocyanate groups per molecule, and (C1) a plate-like inorganic compound or (C2) a light-blocking agent that can block light having a wavelength of 350

nm or less, and an adhesive obtained by curing the resin composition for adhesives.

US 2010/247876 A1 describes an ink composition containing a colorant, a solvent, and a binder composed of 80 to 98% by weight of a polyurethane resin, 0.5 to 5% by weight of a cellulose acetate alkylate resin and 1.0 to 15% by weight of a polyvinyl butyral resin, based on the solids content, in which composition the polyurethane resin is obtained by reacting a reaction product between (A) a polyether diol compound having a Mn of 1,000 to 5,000, or a mixture of the compound and a polyester diol having a Mn of 1,000 to 5,000, and (B) a diisocyanate compound, with (C) a hydroxyldialkylamine having a molecular weight of 50 to 300 and having one hydroxyl group in a molecule, and further reacting the product with (D) a chain extending agent; and a molar ratio of the OH group of the component (C) to the NCO group of the component (B) is 0.05 to 0.35.

Citation List

Patent Literature

[PTL 1] JP-A-2014-004799
[PTL 2] JP-A-2004-238050
[PTL 3] Japanese Patent No. 5975189

Summary of Invention

Technical Problem

An object of the invention is to provide a laminate which is obtained by laminating a printing layer and has desired gas barrier properties, even in a case of using a two-component polyurethane-based adhesive (B) having gas barrier properties.

Solution to Problem

The inventors have made studies about printing ink used in a printing layer, in a case of using the two-component polyurethane-based adhesive (B), and it was found that a binder used in the printing ink and a polyol (B1) used in the two-component polyurethane-based adhesive (B) are compatible with each other. Particularly, in a case of using the two-component polyurethane-based adhesive (B) including the polyol (B1) having a number average molecular weight equal to or smaller than 2,300 and an isocyanate compound (B2), the inventors have found that a combination of a urethane resin (A1) and a vinyl chloride vinyl acetate copolymer resin (A2) is excellent for the binder.

That is, the invention provides a laminate including: a first base material; a second base material; a printing layer provided on a surface of the first base material on a side of the second base material; and an adhesive layer which is disposed between the printing layer and the second base material and bonds the first base material and the second base material to each other, in which the printing layer is formed of a printing ink composition (A) including a urethane resin (A1) and a vinyl chloride vinyl acetate copolymer resin (A2) as binders, the content of the urethane resin (A1) being

4% by mass to 25% by mass with respect to the total weight of the printing ink composition (A), and the content of the vinyl chloride vinyl acetate copolymer resin (A2) being 0.1% by mass to 5.0% by mass with respect to the total amount of the binder, and the adhesive layer is formed by applying a two-component polyurethane-based adhesive (B) including a polyol (B1) having a number average molecular weight equal to or smaller than 2,300 and having a permachor value of 44 to 60 per 1 mol of residues excluding terminal hydroxyl groups, and an isocyanate compound (B2).

In addition, the invention provides a method for manufacturing a laminate including: a step of forming a printing layer on a first base material by using a printing ink composition (A) including a urethane resin (A1) and a vinyl chloride vinyl acetate copolymer resin (A2) as binders, the content of the urethane resin (A1) being 4% by mass to 25% by mass with respect to the total weight of the printing ink composition (A), and the content of the vinyl chloride vinyl acetate copolymer resin (A2) being 0.1% by mass to 5.0% by mass with respect to the total amount of the binder; a step of applying a two-component polyurethane-based adhesive (B) including a polyol (B1) having a number average molecular weight equal to or smaller than 2,300 and having a permachor value of 44 to 60 per 1 mol of residues excluding terminal hydroxyl groups, and an isocyanate compound (B2) onto the printing layer; and a step of bonding the first base material and the second base material together with the two-component polyurethane-based adhesive (B).

Advantageous Effects of Invention

According to the invention, it is possible to obtain a laminate which is obtained by laminating the printing layer and has desired gas barrier properties, even in a case of using a two-component polyurethane-based adhesive (B) having gas barrier properties.

Description of Embodiments

<<Laminate>>

A laminate of the invention, which is defined in claim 1, at least includes a first base material, a second base material, a printing layer provided on a surface of the first base material on a side of the second base material, and an adhesive layer which is disposed between the printing layer and the second base material and bonds the first base material (printing layer) and the second base material to each other. The laminate may further include other base materials, in addition to the first base material and the second base material. The adhesive layer is formed by applying and curing a two-component polyurethane-based adhesive (B) including a polyol (B1) having a number average molecular weight equal to or smaller than 2,300 and having a permachor value of 44 to 60 per 1 mol of residues excluding terminal hydroxyl groups, and an isocyanate compound (B2), and the printing layer is printed by using a printing ink composition (A) including a urethane resin (A1) and a vinyl chloride vinyl acetate copolymer resin (A2) as binders, the content of the urethane resin (A1) being 4% by mass to 25% by mass with respect to the total weight of the printing ink composition (A), and the content of the vinyl chloride vinyl acetate copolymer resin (A2) being 0.1% by mass to 5.0% by mass with respect to the total amount of the binder. In a case where the number average molecular weight of the polyol (B1) used for the adhesive is equal to or smaller than 2,300, the printing layer may be redissolved, thereby easily resulting poor appearance of the laminate. In the invention, by forming the printing layer by using the printing ink composition (A) described above, the remelting of the printing layer is prevented and a laminate without poor appearance can be provided. Hereinafter, the laminate of the invention will be described.

<Base Material>

A material that can be used as the first base material of the laminate of the invention is not particularly limited, as long as at least a part thereof is transparent and a printing layer can be recognized from an opposite surface thereof where a printing layer which will be described later is provided. A material that can be used as the second base material may be transparent or opaque. The kind of materials of the base material including the first base material and the second base material may be same as each other or different from each other, and can be suitably selected according to the purpose.

For example, in a case of using the laminate of the invention as a film for food packaging, examples of a film which can be used as the base material include a polyolefin film such as a PET film, a polystyrene film, a polyamide film, a polyacrylonitrile film, a polyethylene film (LLDPE: low-density polyethylene film, HDPE: high-density polyethylene film), or a polypropylene film (CPP: non-stretched polypropylene film, OPP: biaxially-stretched polypropylene film), a polyvinyl alcohol film, and an ethylene-vinyl alcohol copolymer film. These may be subjected to a stretching process. As a stretching process method, a method of performing melting and extrusion of a resin by an extrusion manufacturing film method or the like to make the resin in a sheet shape, and performing simultaneous biaxial stretching or sequential biaxial stretching is generally used. In a case of performing the sequential biaxial stretching, it is general to perform vertical stretching first and then perform horizontal stretching. Specifically, a method of combining vertical stretching using a speed difference between rolls and horizontal stretching using a tenter is widely used.

Alternatively, a film obtained by laminating an overlayer of metal such as aluminum or metal oxide such as silica or alumina, or a barrier film including a gas barrier layer such as polyvinyl alcohol, an ethylene-vinyl alcohol copolymer, or vinylidene chloride may be used as the base material. By using such a film, it is possible to provide a laminate having barrier properties with respect to vapor, oxygen, alcohol, inert gas, volatile organic substances (scent), and the like.

The surface of the film may be subjected to various surface treatments such as a flame treatment or a corona discharge treatment, if necessary, so that the printing layer and the adhesive layer are formed without defects such as film fragments or crawling.

Examples of a combination of the first base material, the second base material, and other base materials used in the laminate of the invention include: a composite film consisting of two layers in which a thermoplastic resin film selected from PET, OPP, and polyamide is used as the first base material, and a thermoplastic resin film selected from non-stretched polypropylene (hereinafter, abbreviated as CPP) and low-density polyethylene film (hereinafter, abbreviated as LLDPE) is used as the second base material; a composite film consisting of three layers in which a thermoplastic

resin film selected from PET, polyamide, OPP, is used as the first base material and set as an outermost layer, a thermoplastic resin film selected from OPP, PET, and polyamide is used as the second base material and set as an intermediate layer, and a thermoplastic resin film selected from CPP and LLDPE is used as a third base material and set as an innermost layer; and a composite film consisting of four layers in which a thermoplastic resin film selected from OPP, PET, and polyamide is used as the first base material and set as an outermost layer, a thermoplastic resin film selected from PET and nylon is used as the second base material and set as a first intermediate layer, a thermoplastic resin film selected from PET and polyamide is used as the third base material and set as a second intermediate layer, and a thermoplastic resin film selected from LLDPE and CPP is used as the fourth base material and set as an innermost layer.

<Printing Layer>

The printing layer is letters, patterns, or the like printed on the entire surface or a part of the first base material by using the printing ink composition (A), and is formed by a well-known printing system such as gravure printing or flexographic printing. In the laminate of the invention, the printing ink composition (A) used for forming the printing layer includes the urethane resin (A1) and the vinyl chloride vinyl acetate copolymer resin (A2) as binders. Accordingly, even in a case of using the two-component polyurethane-based adhesive (B) having gas barrier properties, desired gas barrier properties can be obtained. First, the printing ink composition (A) used for forming the printing layer will be described.

(Colorant)

As a colorant used in the invention, an organic pigment, an inorganic pigment, a dye, or the like can be used, and there is no particular limitation.

Examples of the organic pigment include an azo-based pigment, a phthalocyanine-based pigment, an anthraquinone-based pigment, a perylene-based pigment, a perinone-based pigment, a quinacridone-based pigment, a thioindigo-based pigment, a dioxazine-based pigment, an isoindolinone-based pigment, a quinophthalone-based pigment, an azomethine azo-based pigment, a dictopyrrolopyrrole-based pigment, and an isoindoline-based pigment.

Examples of the inorganic pigment include carbon black, titanium oxide, zinc oxide, zinc sulfide, barium sulfate, calcium carbonate, chromium oxide, silica, red oxide, aluminum, and mica. In addition, a bright pigment (METASHINE; manufactured by Nippon Sheet Glass Co., Ltd.) obtained by coating metal or metal oxide on glass flake or massive flake as a base material, is used.

A content of the colorant may be the amount sufficient for ensuring concentration and coloring strength of the printing ink composition (A), and is, for example, 1% by mass to 50% by mass with respect to a total weight of the printing ink composition (A). The colorant can be used alone or in combination of two or more kinds thereof.

(Binder)

A binder used in the printing ink composition (A) used in the invention includes the urethane resin (A1) and the vinyl chloride vinyl acetate copolymer resin (A2). By using such a resin as the binder in combination, it is possible to maintain desired gas barrier properties, even in a case of using the two-component polyurethane-based adhesive (B) having gas barrier properties.

The urethane resin (A1) used in the invention preferably includes an active hydrogen-containing functional group, for example, a hydroxyl group, or a primary or secondary amino group.

The urethane resin (A1), for example, can be obtained by a two stage method of obtaining a prepolymer of a terminal isocyanate group by causing a reaction between polyol and an isocyanate compound at a ratio with an excessive amount of the isocyanate group, and causing the obtained prepolymer to react with a chain extender and (or) a terminal blocking agent in a suitable solvent, for example, an ester-based solvent such as ethyl acetate, propyl acetate, or butyl acetate; a ketone-based solvent such as acetone, methyl ethyl ketone, or methyl isobutyl ketone; an alcohol-based solvent such as methanol, ethanol, isopropyl alcohol, or n-butanol; a hydrocarbon solvent such as methylcyclohexane or ethylcyclohexane; or a mixed solvent thereof, or a one stage method of causing a reaction of polyol, an isocyanate compound, a chain extender, and (or) a terminal blocking agent once in the suitable solvent among the solvents described above.

As the polyol used in synthesis of the urethane resin (A1), various well-known polyols generally used in manufacturing of the urethane resin (A1) can be used, and may be used alone or in combination of two or more kinds thereof. Examples thereof include polyether polyols (1) such as a monomer or a copolymer of methylene oxide, ethylene oxide, or tetrahydrofuran; saturated or unsaturated low-molecular polyols (2) such as ethylene glycol, 1,2-propanediol, 1,3-propanediol, 2-methyl-1,3-propanediol, 2-ethyl-2- butyl-1,3-propanediol, 1,3-butanediol, 1,4-butanediol, neopentyl glycol, pentanediol, 3-methyl-1,5-pentanediol, hexanediol, octanediol, 1,4-butynediol, 1,4-butylene diol, diethylene glycol,

triethylene glycol, dipropylene glycol, glycerin, trimethylolpropane, trimethylolethane, 1,2,6-hexanetriol, 1,2,4-butanetriol, sorbitol, or pentaerythritol; polyester polyols (3) obtained by performing dehydration condensation or polymerizing these low-molecular polyols (2) and polycarboxylic acid such as adipic acid, phthalic acid, isophthalic acid, terephthalic acid, maleic acid, fumaric acid, succinic acid, oxalic acid, malonic acid, glutaric acid, pimelic acid, suberic acid, azelaic acid, sebacic acid, trimellitic acid, or pyromellitic acid, or an anhydride thereof; polyester polyols (4) obtained by performing ring-opening polymerization of a cyclic ester compound, for example, lactones such as polycaprolactone, polyvalerolactone, or poly(β-methyl-γ-valerolactone); polycarbonate polyols (5) obtained by a reaction between the low-molecular polyols (2), and, for example, dimethyl carbonate, diphenyl carbonate, ethylene carbonate, or phosgene; polybutadiene glycols (6); glycols (7) obtained by adding ethylene oxide or propylene oxide to bisphenol A; and acrylic polyol (8) obtained by copolymerizing one or more hydroxyethyl, hydroxypropyl acrylate, or hydroxybutyl acrylate in a molecule, or a methacrylic acid derivative corresponding to these, and for example, acrylic acid, methacrylic acid, or ester thereof.

Examples of the isocyanate compound used in the synthesis of the urethane resin (A1) include various well-known aromatic diisocyanate, aliphatic diisocyanate, and alicyclic diisocyanate generally used for manufacturing of the urethane resin (A1). Specific examples thereof include 1,5-naphthylene diisocyanate, 4,4'-diphenylmethane diisocyanate, 4,4'-diphenyldimethylmethane diisocyanate, 4,4'-dibenzyl diisocyanate, dialkyl diphenyl methane diisocyanate, tetraalkyl diphenyl methane diisocyanate, 1,3-phenylene diisocyanate, 1,4-phenylene diisocyanate, tolylene diisocyanate, butane-1,4-diisocyanate, hexamethylene diisocyanate, isopropylene diisocyanate, methylene diisocyanate, 2,2,4-trimethylhexamethylene diisocyanate, lysine diisocyanate, cyclohexane-1,4-diisocyanate, xylylene diisocyanate, isophorone diisocyanate, dimethylene diisocyanate, dicyclohexylmethane-4,4'-diisocyanate, 1,3-bis (isocyanatomethyl) cyclohexane, methylcyclohexane diisocyanate, norbornane diisocyanate, m-tetramethylxylylene diisocyanate, bis-chloromethyl-diphenylmethane-diisocyanate, 2,6-diisocyanate-benzyl chloride, and dimer diisocyanate obtained by converting a carboxyl group of a dimer acid. These diisocyanate compounds can be used alone or by mixing two or more kinds thereof.

Examples of the chain extender used in the synthesis of the urethane resin (A1) include amines including a hydroxyl group in a molecule such as 2-hydroxyethyl ethylenediamine, 2-hydroxypropyl ethylenediamine, 2-hydroxyethyl propyl diamine, 2-hydroxyethylpropylenediamine, di-2-hydroxyethylethylenediamine, di-2-hydroxyethylenediamine, di-2-hydroxyethylpropylenediamine, di-2-hydroxypropylethylenediamine, and di-2-hydroxypropylethylenediamine, in addition to ethylenediamine, propylenediamine, hexamethylenediamine, diethylenetriamine, triethylene tetramine, isophorone diamine, or dicyclohexyl methane-4,4'-diamine. These chain extenders can be used alone or by mixing two or more kinds thereof.

Examples of the terminal blocking agent used for stopping the reaction used in the synthesis of the urethane resin (A1) include dialkyl amines such as di-n-butylamine, and monovalent active hydrogen compound such as alcohols such as ethanol or isopropyl alcohol. In addition, particularly, in a case where it is desired that a carboxyl group is introduced to the urethane resin (A1), an amino acid such as glycine or L-alanine can be used. These terminal blocking agents can be used alone or by mixing two or more kinds thereof.

A weight average molecular weight of the urethane resin (A1) obtained as described above is preferably 15,000 to 100,000. By setting the weight average molecular weight thereof to be equal to or greater than 15,000, excellent blocking resistance, film strength, and oil resistance of the printing layer can be maintained. In addition, by setting the weight average molecular weight thereof to be equal to or smaller than 100,000, an increase in viscosity of the printing ink composition (A) can be prevented and gloss of the printing film can be ensured.

A content of the urethane resin (A1) is equal to or greater than 4% by mass with respect to a total weight of the printing ink composition (A), in order to obtain excellent adhesiveness between the first base material and the printing layer. In addition, the content thereof is equal to or smaller than 25% by mass, in order to prevent an increase in viscosity of the printing ink composition (A). The content thereof is preferably 6% by mass to 15% by mass.

The vinyl chloride vinyl acetate copolymer resin (A2) used in the invention can be obtained by copolymerizing a vinyl chloride monomer, a vinyl acetate monomer, and vinyl alcohol at a suitable ratio. Alternatively, the vinyl chloride vinyl acetate copolymer resin can be obtained by copolymerizing vinyl chloride monomer and vinyl acetate monomer, and performing partial saponification of vinyl acetate.

It is preferable to adjust the ratio of the monomers used in the synthesis, so that a proportion of a structure derived from vinyl chloride with respect to 100 parts by weight of the vinyl chloride vinyl acetate copolymer resin (A2) is 80 parts by weight to 95 parts by weight, in order to satisfy adhesiveness, blocking resistance, laminate strength, boil retort adaptability, and printing adaptability. In a case where the proportion thereof is smaller than 80 parts by weight, strength and blocking resistance of the printing layer are deteriorated. In a case where the proportion thereof is greater than 95 parts by weight, the printing layer becomes excessively hard, and the adhesiveness between the first base material and the printing layer is deteriorated.

In addition, a hydroxyl value of the vinyl chloride vinyl acetate copolymer resin (A2) is preferably 50 mgKOH/g to 200 mgKOH/g.

A content of the vinyl chloride vinyl acetate copolymer resin (A2) is 0.1% by mass to 5.0% by mass with respect

to a total amount of the binder.

In the printing ink composition (A) used in the invention, a chlorinated polypropylene resin, an ethylene-vinyl acetate copolymer resin, a vinyl acetate resin, a polyamide resin, an acrylic resin, a polyester resin, an alkyd resin, a polyvinyl chloride resin, a rosin resin, a rosin-modified maleic acid resin, a ketone resin, cyclized rubber, chlorinated rubber, butyral, or a petroleum resin may be used together, in addition to the urethane resin (A1) and the vinyl chloride vinyl acetate copolymer resin (A2). Among these, in a case of using an isocyanate curing agent which will be described later in combination, it is preferable to use a styrene maleic anhydride resin in combination, from viewpoints of improving stability and stabilizing viscosity of a mixture after the combination use. These resins to be used in combination can be used alone or by mixing two or more kinds thereof. A content of the resin to be used in combination is preferably 1% by mass to 25% by mass and more preferably 2% by mass to 15% by mass with respect to a total weight of the printing ink composition (A).

(Solvent)

The printing ink composition (A) used in the invention generally includes a solvent. As the solvent, a typical organic solvent can be mainly used. Examples thereof include an aromatic solvent such as toluene or xylene, a ketone-based solvent such as acetone, methyl ethyl ketone, or methyl isobutyl ketone, and an ester-based solvent such as ethyl acetate, n-propyl acetate, butyl acetate, or propylene glycol monomethyl ether acetate, and these can be used alone or as a mixture of two or more kinds thereof. From a viewpoint of a work environment, it is preferable to avoid use of aromatic solvent such as toluene or xylene as much as possible.

In addition, the printing ink composition (A) may include less than 10% by mass of water. Water may be used by being added to the organic solvent or separately added.

(Isocyanate Curing Agent)

In the laminate of the invention, it is preferable to form the printing layer by using isocyanate curing agent in combination with the printing ink composition (A) described above, it is possible to prevent the remelting of the printing layer which may occur in a case where the adhesive layer is provided on the printing layer by using the two-component polyurethane-based adhesive (B) which will be described later. (An aspect of using the isocyanate curing agent in combination with the printing ink composition (A) described above may be referred to as a two-component printing ink composition) The polyol (B1) having a number average molecular weight equal to or smaller than 2,300 is a compulsory component in the two-component polyurethane-based adhesive (B), and this may cause the remelting of the printing layer. The printing ink layer of the laminate of the invention includes the urethane resin (A1) and the vinyl chloride vinyl acetate copolymer resin (A2), a certain degree of gas barrier properties can be maintained, even in a case where the remelting occurs. However, in a case of forming the printing layer by using the isocyanate curing agent in combination with the printing ink composition (A), it is possible to prevent the remelting of the printing layer, it is possible to provide a laminate having more excellent gas barrier properties without poor appearance.

As the isocyanate curing agent used in the invention, a material obtained by diluting isocyanate with a solvent is used.

As isocyanate used for the isocyanate curing agent, aliphatic or aromatic isocyanate can be used, and any of a low-molecular compound or a high-molecular compound may be used. As such isocyanate, hexamethylene diisocyanate, dicyclohexyl methane diisocyanate, isophorone diisocyanate, trimethyl hexamethylene isocyanate, 1,6,11-undecane triisocyanate, lysine diisocyanate, lysine ester triisocyanate, 1,8-diisocyanate-4-isocyanatomethyloctane, 1,3,6-hexamethylene triisocyanate, bicycloheptane triisocyanate, or a trimer of these isocyanates can be used, an adduct, a biuret, or an isocyanurate of diisocyanate is preferable among these, and an adduct, a biuret, or an isocyanurate of hexamethylene diisocyanate or isophorone diisocyanate is particularly preferable. The curing agent may be used alone or in combination of two or more kinds thereof.

Examples of the solvent used for the isocyanate curing agent include esters such as ethyl acetate, butyl acetate, or cellosolve acetate, ketones such as acetone, methyl ethyl ketone, isobutyl ketone, or cyclohexanone, ethers such as tetrahydrofuran or dioxane, aromatic hydrocarbons such as toluene or xylene, halogenated hydrocarbons such as methylene chloride or ethylene chloride, dimethyl sulfoxide, and dimethyl sulfoamide. Ethyl acetate or methyl ethyl ketone is suitably used.

The isocyanate curing agent is preferably added and used so that the amount of isocyanate included in the curing agent is 0.4% by mass to 9.5% by mass with respect to a total weight of the printing ink composition (A), and is preferably added so that the amount thereof is 1.0% by mass to 4.0% by mass. In a case where the amount thereof is smaller than 0.4% by mass, an effect of preventing the remelting of the printing layer is reduced, and in a case where the amount thereof is greater than 9.5% by mass, blocking easily occurs in a case of winding a printed base material film, the printing layer (printing ink film) becomes excessively hard, and crack may occur in a case of forming process.

(Additive)

Various additives may be added to the printing ink composition (A), if necessary. As the additive, a ultraviolet absorber, a light stabilizer, an anti-blocking agent, a dispersant, an antisettling agent, or the like can be used. A content of the dispersant or the antisettling agent is preferably 0.05% by mass to 10% by mass with respect to a total weight of the printing ink composition (A).

(Printing Layer)

The printing layer of the invention is formed on the first base material by using the printing ink composition (A). A coating method of the printing ink composition (A) is not particularly limited and the coating of the printing ink composition (A) can be performed by a general method such as a gravure coating method, a flexo coating method, a roll coating method, a bar coating method, a die coating method, a curtain coating method, or a spin coating method. This is left still or blowing, heating, or drying under reduced pressure is performed, if necessary, and accordingly, the printing layer can be formed.

The viscosity of the printing ink composition (A) may be adjusted according to the coating method, and is, for example, preferably 10 mPa·s to 1,000 mPa·s. The viscosity of the printing ink composition (A) is a value measured at 25°C by using a B type viscometer. The viscosity of the printing ink composition (A) can be suitably adjusted depending on the kind or amount of the material such as the colorant, the binder, or the solvent. In addition, the viscosity can also be adjusted depending on a particle size or a particle size distribution of the pigment used as the colorant.

<Adhesive Layer>

The adhesive layer of the invention is provided by applying the two-component polyurethane-based adhesive (B) including a polyol (B1) having a number average molecular weight equal to or smaller than 2,300 and having a permachor value of 44 to 60 per 1 mol of residues excluding terminal hydroxyl groups and the isocyanate compound (B2) on the printing layer, and is a cured layer after bonding the first base material and the second base material. The first base material (printing layer) and the second base material are bonded to each other through the adhesive layer. Hereinafter, the two-component polyurethane-based adhesive (B) used in the formation of the adhesive layer will be described.

(Polyol (B1))

The polyol (B1) provided for the formation of the adhesive layer is not particularly limited, as long as it has a number average molecular weight equal to or smaller than 2,300 and a permachor value of 44 to 60 per 1 mol of residues excluding terminal hydroxyl groups and desired adhesiveness can be exhibited due to a reaction with the isocyanate compound (B2). A resin which has a polyester structure, a polyester polyurethane structure, a polyether structure, or a polyether polyurethane structure as a main skeleton and including two or more hydroxyl groups in a terminal is preferably used.

The polyol (B1) may be linear, branched, or a mixture thereof, and branched polyol or a mixture of branched polyol and linear polyol is preferably used, because the branched polyol causes the remelting of the printing layer to hardly occur, compared to the linear polyol.

The polyol (B1) is obtained by condensation polymerization of divalent, trivalent or higher valent polyhydric alcohol, polycarboxylic acid, or polyvalent isocyanate.

Examples of the divalent alcohol used in the synthesis of the polyol (B1) include polyalkylene glycol such as ethylene glycol, diethylene glycol, propylene glycol, or dipropylene glycol, aliphatic diol such as 1,2-butanediol, 1,3-butanediol, 1,4-butanediol, 2,3-butanediol, 3-methyl-1,5-pentanediol, neopentyl glycol, 2-methyl-2-propyl-1,3-propanediol, 1,5-pentanediol, 1,6-hexanediol, 2-methyl-2,4-pentanediol, 2,2,4-trimethyl-1,3-pentanediol, 2-ethyl-1,3-hexanediol, 2,5-dimethyl-2,5-hexanediol, 1,8-octanediol, or 1,9-nonanediol; alicyclic diol such as 1,2-cyclohexane diol, 1,2-cyclohexane dimethanol, 1,3-cyclohexane diol, 1,3-cyclohexanedimethanol, 1,4-cyclohexanediol, or 1,4-cyclohexanedimethanol; and aromatic diol such as 1,3-bishydroxyethylbenzene, 1,4-bishydroxyethylbenzene, hydroquinone, resorcin, Catechol, 4,4'-dihydroxydiphenyl, 4,4'-dihydroxybenzophenone, 4,4'-dihydroxydiphenylmethane, 4,4'-dihydroxydiphenylethane, 4,4'-dihydroxydiphenyl ether, 2,2'-bis (4-hydroxyphenyl) propane, 4,4'-hydroxydiphenyl sulfone, 4,4'-dihydroxydiphenyl sulfide, 2,6-dihydroxynaphthalene, or 1,5-(di)hydroxynaphthalene.

Examples of trivalent or higher valent polyhydric alcohol used in the synthesis of the polyol (B1) include aliphatic polyhydric alcohols such as glycerin, trimethylolpropane, trimethylolethane, tris(2-hydroxyethyl) isocyanurate, 1,2,4-butanetriol, 1,2,6-hexanetriol, pentaerythritol, diglycerin, dipentaerythritol, triglycerin, or tripentaerythritol; alicyclic polyhydric alcohol such as cyclohexanetriol; and saccharides such as xylose, arabinose, ribulose, glucose, fructose, mannose, galactose, erythritol, threitol, arabitol, ribitol, xylitol, sorbitol, mannitol, or sucrose.

Examples of dicarboxylic acid used in the synthesis of the polyol (B1) include aliphatic dicarboxylic acid such as succinic acid, glutaric acid, adipic acid, pimelic acid, Suberic acid, azelaic acid, sebacic acid, decanedioic acid, or dodecanedioic acid; unsaturated bond-containing dicarboxylic acid such as maleic anhydride, maleic acid, or fumaric acid; alicyclic polycarboxylic acid such as 1,3-cyclopentane dicarboxylic acid or 1,4-cyclohexane dicarboxylic acid; and aromatic dicarboxylic acid such as orthophthalic acid, terephthalic acid, isophthalic acid, 1,4-naphthalenedicarboxylic acid, 2,5-naphthalenedicarboxylic acid, 2,6-naphthalene dicarboxylic acid, naphthalic acid, biphenyl dicarboxylic acid, diphenic acid, or an anhydride thereof.

Examples of trifunctional polycarboxylic acid used in the synthesis of the polyol (B1) include aliphatic polycarboxylic acid such as 1,2,3-propanetricarboxylic acid or meso-butane-1,2,3,4-tetracarboxylic acid; alicyclic polycarboxylic acid such as cyclobutane tetracarboxylic acid, cyclopentane tetracarboxylic acid, cyclohexane tetracarboxylic acid, or acid anhydride thereof; and aromatic polycarboxylic acid such as pyromellitic acid, trimellitic acid, benzophenone tetracarboxylic acid, naphthalene tetracarboxylic acid, or anhydride thereof.

Examples of divalent isocyanate used in the synthesis of the polyol (B1) include tetramethylene diisocyanate, hexamethylene diisocyanate, toluene diisocyanate, diphenylmethane diisocyanate, hydrogenated diphenylmethane diisocyanate, xylylene diisocyanate, hydrogenated xylylene diisocyanate, and isophorone diisocyanate.

As trivalent or higher valent polyvalent isocyanate used in the synthesis of the polyol (B1), an adduct obtained by a reaction between an excessive amount of a diisocyanate compound such as tetramethylene diisocyanate, hexamethylene diisocyanate, toluene diisocyanate, diphenylmethane diisocyanate, hydrogenated diphenylmethane diisocyanate, xylylene diisocyanate, hydrogenated xylylene diisocyanate, or isophorone diisocyanate, and a low-molecular active hydrogen compound such as trimethylolpropane, glycerol, pentaerythritol, erythritol, sorbitol, or triethanolamine, and an alkylene oxide adduct thereof, or a high-molecular active hydrogen compound such as various polyester resins, polyether polyols, or polyamides is used.

The compound used in the synthesis of the polyol (B1) can be used alone or by mixing two or more kinds thereof. In addition, the polyol (B1) used in the invention can be synthesized by a well-known common method.

Among these, a polyester polyol can be preferably used when gas barrier properties should be imparted to the adhesive layer. Specifically, any polyester polyol having two or more hydroxyl groups may be used as long as it is a polycondensate that substantially has two or more hydroxyl groups, is obtained by polycondensation reaction between a polycarboxylic acid component and a polyhydric alcohol component, and is capable of imparting gas barrier properties. The polyester polyol preferably has an aromatic ring, and more preferably has an ortho-oriented aromatic ring so that it can impart excellent gas barrier properties.

More specific examples of polyester polyol including a plurality of hydroxyl groups include polyester polyol (B1-0) obtained by condensation polymerization of a polycarboxylic acid component including an aromatic polycarboxylic acid component, more preferably, an ortho-oriented aromatic polycarboxylic acid component, and a polyhydric alcohol component, polyester polyol (B1-1) obtained by reacting carboxylic anhydride or polycarboxylic acid with polyester polyol including three or more hydroxyl groups, polyester polyol (B1-2) having a polymerizable carbon-carbon double bond, polyester polyol (B1-3) having a glycerol skeleton, and polyester polyol (B1-4) having an isocyanuric ring, but the invention is not limited thereto.

Hereinafter, each polyester polyol will be described.

[Polyester Polyol (B1-0)]

The polyester polyol (B1-0) used in the invention is obtained by condensation polymerization of a polycarboxylic acid component including an aromatic polycarboxylic acid component, more preferably, an ortho-oriented aromatic polycarboxylic acid component, and a polyhydric alcohol component.

(Aromatic Polycarboxylic Acid)

Aromatic polycarboxylic acid is preferably used for obtaining gas barrier properties. Specific examples of aromatic polycarboxylic acid include orthophthalic acid, terephthalic acid, isophthalic acid, pyromellitic acid, trimellitic acid, 1,4-naphthalene dicarboxylic acid, 2,5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, and anhydride or an ester-forming derivative of these dicarboxylic acids. These can be used alone or as a mixture of two or more kinds thereof. In addition, an acid anhydride thereof can also be used.

Among these, orthophthalic acid, terephthalic acid, isophthalic acid, and an anhydride thereof are preferable, and orthophthalic acid and an acid anhydride thereof are more preferable.

(Orthophthalic Acid and Anhydride Thereof)

Orthophthalic acid and an anhydride thereof have a skeleton having an asymmetric structure. Accordingly, it is assumed that rotation of molecular chains of the obtained polyester is prevented, and therefore, it is assumed that gas barrier properties are excellent. In addition, it is assumed that amorphous properties due to this asymmetric structure are shown, sufficient base material adhesiveness is applied, and excellent adhesiveness and gas barrier properties are obtained. Further, solvent solubility which is necessary in a case of the usage as a dry laminate adhesive, is high, and thus, excellent handleability is also obtained.
Examples of other polycarboxylic acid which can be used in combination with the aromatic polycarboxylic acid include aliphatic polycarboxylic acid such as succinic acid, adipic acid, azelaic acid, sebacic acid, or dodecanedicarboxylic acid, and alicyclic polycarboxylic acid such as 1,3-cyclopentane dicarboxylic acid or 1,4-cyclohexane dicarboxylic acid. These can be used alone or as a mixture of two or more kinds thereof. In addition, an acid anhydride thereof can also be used.
Among these, succinic acid, 1,3-cyclopentane dicarboxylic acid, or isophthalic acid is preferably used in combination.
A content of the polyester polyol (B1-0) is preferably 70% to 100% by mass with respect to a total component of polycarboxylic acid such as the orthophthalic acid and an anhydride thereof.

(Polyhydric Alcohol Component)

Specific examples of polyhydric alcohol used in the invention include ethylene glycol, propylene glycol, butylene glycol, neopentyl glycol, cyclohexanedimethanol, 1,5-pentanediol, 3-methyl-1,5-pentanediol, 1,6-hexanediol, methylpentanediol, dimethyl butane diol, butyl ethyl propane diol, diethylene glycol, triethylene glycol, tetraethylene glycol, dipropylene glycol, or tripropylene glycol as aliphatic diol, hydroquinone, resorcinol, catechol, naphthalenediol, biphenol, bisphenol A, bisphenol F, or tetramethylbiphenol as aromatic polyhydric phenol, an ethylene oxide elongation product thereof, and an hydrogenated alicyclic group.
It is assumed that, among these, as the number of carbon atoms among the oxygen atoms is small, the molecular chain hardly becomes excessively flexible, and thus, ethylene glycol, propylene glycol, butylene glycol, neopentyl glycol, and cyclohexane dimethanol are preferable, and ethylene glycol is more preferable.
The condensation polymerization reaction between a polycarboxylic acid component including an aromatic polycarboxylic acid component, more preferably, an ortho-oriented aromatic polycarboxylic acid component, and a polyhydric alcohol component can be performed by a well-known method.

[Polyester Polyol (B1-1) Obtained by Reacting Carboxylic Anhydride or Polycarboxylic Acid with Polyester Polyol Including Three or More Hydroxyl Groups]

The polyester polyol (B1-1) used in the invention includes at least one carboxyl group and two or more hydroxyl groups obtained by reacting carboxylic anhydride or polycarboxylic acid with polyester polyol including three or more hydroxyl groups.
The polyester polyol including three or more hydroxyl groups is obtained by setting a part of polycarboxylic acid or polyhydric alcohol to be tri- or higher valent.
Among these, polyester polyol including three or more hydroxyl groups, consisting of a polycarboxylic acid component including at least one or more kinds of orthophthalic acid and an anhydride thereof as polycarboxylic acid, and a polyhydric alcohol component including at least one or more kinds selected from the group consisting of ethylene glycol, propylene glycol, butylene glycol, neopentyl glycol, and cyclohexane dimethanol, is preferable.
In a case of introducing a branched structure by the polycarboxylic acid component in a case of synthesizing the polyester polyol including three or more hydroxyl groups, it is necessary to include tri- or higher valent carboxylic acid at least in a part thereof. Examples of these compounds include trimellitic acid and an acid anhydride thereof, and pyromellitic acid and an acid anhydride thereof, and trivalent carboxylic acid is preferable as the tri- or higher valent carboxylic acid, in order to prevent gelation at the time of synthesis.
For the polyester polyol, a polycarboxylic acid component other than the orthophthalic acid and an anhydride thereof may be copolymerized, within a range not negatively affecting the effect of the invention. Specifically, succinic acid, adipic acid, azelaic acid, sebacic acid, and dodecanedicarboxylic acid can be used alone or as a mixture of two or more kinds thereof as aliphatic polycarboxylic acid, a maleic anhydride, maleic acid, and fumaric acid can be used alone or as a mixture of two or more kinds thereof as unsaturated bond-containing polycarboxylic acid, 1,3-cyclopentane dicarboxylic acid and 1,4-cyclohexane dicarboxylic acid can be used alone or as a mixture of two or more kinds thereof as alicyclic polycarboxylic acid, polybasic acid of terephthalic acid, isophthalic acid, pyromellitic acid, trimellitic acid, 1,4-naphthalenedicarboxylic acid, 2,5-naphthalenedicarboxylic acid, 2,6-naphthalenedicarboxylic acid, naphthalic acid, biphenyl dicarboxylic acid, 1,2-bis (phenoxy) ethane-p, p'-dicarboxylic acid, and an anhydride or an ester-forming derivative of these dicarboxylic acid; or p-hydroxybenzoic acid, p-(2-hydroxyethoxy) benzoic acid, and an ester-forming derivative of these dicarboxylic acid can be used alone or as a mixture of two or more kinds thereof as aromatic polycarboxylic acid. Among these, succinic acid, 1,3-cyclopentane dicarboxylic acid, and isophthalic acid are preferable.

(Polyhydric Alcohol and Other Components)

In a case of introducing a branched structure by the polyhydric alcohol component in a case of synthesizing the polyester polyol, it is necessary to include tri- or higher valent polyhydric alcohol at least in a part thereof. Examples of these compounds include glycerin, trimethylolpropane, trimethylolethane, tris(2-hydroxyethyl) isocyanurate, 1,2,4-butanetriol, pentaerythritol, and dipentaerythritol, and trivalent alcohol is preferable in order to prevent gelation at the time of synthesis.

Regarding the polyhydric alcohol component including at least one kind selected from the group consisting of ethylene glycol, propylene glycol, butylene glycol, neopentyl glycol, and cyclohexane dimethanol used at the time of synthesis of the polyester polyol, it is assumed that, as the number of carbon atoms among oxygen atoms is small, the molecular chain hardly becomes excessively flexible, and thus, it is most preferable to use ethylene glycol.

Meanwhile, in addition to the polyhydric alcohol component exemplified here, other polyhydric alcohol components may be copolymerized, within a range not negatively affecting the effect of the invention. Specific examples thereof include 1,5-pentanediol, 3-methyl-1,5-pentanediol, 1,6-hexanediol, methylpentanediol, dimethylbutanediol, butylethylpropanediol, diethylene glycol, triethylene glycol, tetraethylene glycol, dipropylene glycol, or tripropylene glycol, as aliphatic diol, hydroquinone, resorcinol, catechol, naphthalenediol, biphenol, bisphenol A, bisphenol F, or tetramethylbiphenyl, as aromatic polyhydric phenol, an ethylene oxide elongation product thereof, and an hydrogenated alicyclic group.

The reaction between the polyester polyol and carboxylic anhydride or polycarboxylic acid can be performed by a well-known method. The polyester polyol can be obtained by, for example, causing a reaction of polycarboxylic acid or an acid anhydride thereof with a hydroxyl group of polyester polyol. Two or more hydroxyl group of the polyester polyol after the reaction are necessary, and thus, a ratio of the polyester polyol and polycarboxylic acid is preferably set so that polycarboxylic acid reacts with 1/3 or lower of the hydroxyl group of the polyester polyol. A carboxylic acid anhydride or polycarboxylic acid used here are not limited, and a divalent or trivalent carboxylic acid anhydride is preferably used, in a case of considering gelation at the time of the reaction between the polycarboxylic acid and the polyester polyol. As a divalent carboxylic acid anhydride, a succinic anhydride, a maleic anhydride, a 1,2-cyclohexanedicarboxylic anhydride, a 4-cyclohexene-1,2-dicarboxylic anhydride, a 5-norbornene-2,3-dicarboxylic anhydride, a phthalic anhydride, or a 2,3-naphthalenedicarboxylic anhydride can be used, and as a trivalent divalent carboxylic acid anhydride, a trimellitic anhydride or the like can be used.

Regarding the polyester polyol (B1-1), a hydroxyl value is preferably 20 to 250 and an acid value is preferably 20 to 200. The hydroxyl value can be measured by a hydroxyl value measurement method disclosed in JIS-K0070 and the acid value can be measured by an acid value measurement method disclosed in JIS-K0070. In a case where the hydroxyl value is smaller than 20 mgKOH/g, viscosity increases due to an excessively large molecular weight, and accordingly, excellent coating adaptability is not obtained. In contrast, in a case where the hydroxyl value is greater than 250 mgKOH/g, crosslink density of a cured coating film excessively increases due to an excessively small molecular weight, and accordingly, excellent adhesion strength may not be obtained. In a case where the acid value is smaller than 20 mgKOH/g, a degree of interaction between molecules decreases, and accordingly, excellent gas barrier properties and an excellent initial cohesive force are not obtained. In contrast, in a case where the acid value is greater than 200 mgKOH/g, the reaction with the isocyanate compound (B2) is excessively rapidly performed, and accordingly, excellent coating adaptability may not be obtained.

[Polyester Polyol (B1-2) Having Polymerizable Carbon-Carbon Double Bond]

The polyester polyol (B1-2) used in the invention has a polymerizable carbon-carbon double bond in a molecule. Specifically, the polyester polyol is polyester polyol in which a polymerizable carbon-carbon double bond is introduced into a molecule of the polyester polyol (B1-2), by using a component having a polymerizable carbon-carbon double bond as a component of polycarboxylic acid or polyhydric alcohol.

(Polycarboxylic Acid)

As the polycarboxylic acid component, specifically, succinic acid, adipic acid, azelaic acid, sebacic acid, and dodecanedicarboxylic acid can be used alone or as a mixture of two or more kinds thereof as aliphatic polycarboxylic acid, 1,3-cyclopentane dicarboxylic acid and 1,4-cyclohexane dicarboxylic acid can be used alone or as a mixture of

two or more kinds thereof as alicyclic polycarboxylic acid, polybasic acid of orthophthalic acid, terephthalic acid, isophthalic acid, pyromellitic acid, trimellitic acid, 1,4-naphthalenedicarboxylic acid, 2,5-naphthalenedicarboxylic acid, 2,6-naphthalenedicarboxylic acid, naphthalic acid, biphenyl dicarboxylic acid, 1,2-bis (phenoxy) ethane-p, p'-dicarboxylic acid, and an anhydride or an ester-forming derivative of these dicarboxylic acid; or p-hydroxybenzoic acid, p-(2-hydroxyethoxy) benzoic acid, and an ester-forming derivative of these dicarboxylic acid can be used alone or as a mixture of two or more kinds thereof as aromatic polycarboxylic acid. In addition, an acid anhydride thereof can also be used.

Among these, succinic acid, 1,3-cyclopentane dicarboxylic acid, orthophthalic acid, an acid anhydride of orthophthalic acid, and isophthalic acid are preferable, and orthophthalic acid and an acid anhydride thereof are more preferable, in order to obtain gas barrier properties.

(Polycarboxylic Acid Having Polymerizable Carbon-Carbon Double Bond)

Examples of the polycarboxylic acid having a polymerizable carbon-carbon double bond include a maleic anhydride, maleic acid, fumaric acid, 4-cyclohexene-1,2-dicarboxylic acid and its acid anhydride, 3-methyl-4-cyclohexene- 1,2-dicarboxylic acid, and an anhydride thereof. It is assumed that, among these, as the number of carbon atoms among the oxygen atoms is small, the molecular chain hardly becomes excessively flexible, and thus, a maleic anhydride, maleic acid, and fumaric acid are preferable.

(Polyhydric Alcohol Component)

Specific examples of the polyhydric alcohol component include ethylene glycol, propylene glycol, butylene glycol, neopentyl glycol, cyclohexanedimethanol, 1,5-pentanediol, 3-methyl-1,5-pentanediol, 1,6-hexanediol, methylpentanediol, dimethyl butane diol, butyl ethyl propane diol, diethylene glycol, triethylene glycol, tetraethylene glycol, dipropylene glycol, or tripropylene glycol as aliphatic diol, hydroquinone, resorcinol, catechol, naphthalenediol, biphenol, bisphenol A, bisphenol F, or tetramethylbiphenol as aromatic polyhydric phenol, an ethylene oxide elongation product thereof, and an hydrogenated alicyclic group.

It is assumed that, among these, as the number of carbon atoms among the oxygen atoms is small, the molecular chain hardly becomes excessively flexible, and thus, ethylene glycol, propylene glycol, butylene glycol, neopentyl glycol, and cyclohexane dimethanol are preferable, and ethylene glycol is more preferable.

(Polyhydric Alcohol Having Polymerizable Carbon-Carbon Double Bond)

Examples of the polyhydric alcohol having a polymerizable carbon-carbon double bond among polyhydric alcohol include 2-butene-1,4-diol and the like.

In addition to the polyester polyols described above, the polyester polyol (B1-2) obtained by a reaction between polyester polyol having a hydroxyl group and carboxylic acid or a carboxylic anhydride having a polymerizable double bond may be used. As the carboxylic acid in this case, carboxylic acid having a polymerizable double bond such as maleic acid, a maleic anhydride, or fumaric acid, or an unsaturated fatty acid such as oleic acid or sorbic acid can be used. Polyester polyol including two or more hydroxyl group is preferable as the polyester polyol in this case, and polyester polyol having three or more hydroxyl is more preferable, in a case of considering molecular extension due to the crosslinking with polyisocyanate. In a case where the number of hydroxyl group of the polyester polyol is 1 or 2, the number of hydroxyl group of the polyester polyol (B1-2) obtained by reacting carboxylic acid having a polymerizable double bond is 0 or 1, the molecular extension due to the reaction with the isocyanate compound (B2) hardly occurs, and accordingly, properties such as laminate strength or sealing strength of the adhesive and heat resistance may be hardly obtained.

The condensation polymerization reaction between the polycarboxylic acid component and the polyhydric alcohol component can be performed by a well-known typical method. A hydroxyl value of the polyester polyol (B1-2) is preferably 20 to 250 mgKOH/g and an acid value thereof is preferably 0 to 100 mgKOH/g. The hydroxyl value can be measured by a hydroxyl value measurement method disclosed in JIS-K0070 and the acid value can be measured by an acid value measurement method disclosed in JIS-K0070. In a case where the hydroxyl value is smaller than 20 mgKOH/g, viscosity increases due to an excessively large molecular weight, and accordingly, excellent coating adaptability may not be obtained. In contrast, in a case where the hydroxyl value is greater than 250 mgKOH/g, crosslink density of a cured coating film excessively increases due to an excessively small molecular weight, and accordingly, excellent adhesion strength may not be obtained.

In addition, the amount of a monomer component having a polymerizable carbon-carbon double bond is preferably 5 to 60 parts by mass with respect to 100 parts by mass of a total monomer component configuring the polyester polyol (B1-2). In a case where the amount thereof is lower than this range, the number of crosslinking points between polymerizable double bonds decreases, gas barrier properties are hardly obtained. In a case where the amount thereof is higher than the range, the number of crosslinking points increases, and thus, flexibility of the cured coating film

significantly decreases, thereby hardly obtaining laminate strength.

In the specification, the amount of the monomer component having a polymerizable carbon-carbon double bond (double bond component percentage) in the polyester polyol (B1-2) is calculated by Expression (a). The monomer here indicates polycarboxylic acid and polyhydric alcohol described above.

[Expression 1]

$$\text{Double bond component percentage} = \text{mass of double bond component (monomer)}/\text{mass of total component (monomer)} \times 100 \quad \text{(a)}$$

As the polyester polyol (B1-2), well-known typical drying oil or semi-drying oil having a carbon-carbon double bond may be used.

[Polyester Polyol (B1-3) Having Glycerol Skeleton]

The polyester polyol (B1-3) used in the invention is polyester polyol having a glycerol skeleton represented by General Formula (1).

[Chem. 1]

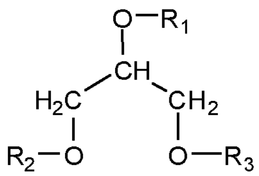

(1)

(In General Formula (1), $R_1$ to $R_3$ each independently represent a hydrogen atom or a group represented by General Formula (2).

[Chem. 2]

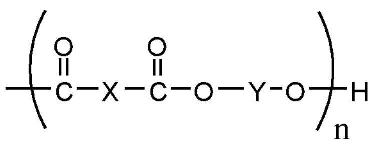

(2)

(In General Formula (2), n represents an integer of 1 to 5, X represents an arylene group selected from the group consisting of a 1,2-phenylene group, a 1,2-naphthylene group, a 2,3-naphthylene group, a 2,3-anthraquinonediyl group, and a 2,3-anthracenediyl group which may have a substituent, and Y represents an alkylene group having 2 to 6 carbon atoms.) Here, at least one of $R_1$ to $R_3$ represents a group represented by General Formula (2).)

In General Formula (1), at least one of $R_1$, $R_2$, and $R_3$ is necessarily a group represented by General Formula (2). Particularly, it is preferable that all of $R_1$, $R_2$, and $R_3$ are groups represented by General Formula (2).

In addition, a mixture of any two or more compounds of a compound in which any one of $R_1$, $R_2$, and $R_3$ is a group represented by General Formula (2), a compound in which any two of $R_1$, $R_2$, and $R_3$ are groups represented by General Formula (2), and a compound in which all of $R_1$, $R_2$, and $R_3$ are groups represented by General Formula (2) may be used.

X represents an arylene group which may have a substituent and is selected from the group consisting of a 1,2-phenylene group, a 1,2-naphthylene group, a 2,3-naphthylene group, a 2,3-anthraquinonediyl group, and a 2,3-anthracenediyl group. In a case where X is substituted with a substituent, X may be substituted with one or a plurality of substituents, and the substituent is bonded with a random carbon atom of X different from a free radical. Examples of the substituent include a chloro group, a bromo group, a methyl group, an ethyl group, an i-propyl group, a hydroxyl group, a methoxy group, an ethoxy group, a phenoxy group, a methylthio group, a phenylthio group, a cyano group, a nitro group, an amino group, a phthalimide group, a carboxyl group, a carbamoyl group, an N-ethylcarbamoyl group, a

phenyl group, and a naphthyl group.

In General Formula (2), Y represents an alkylene group having 2 to 6 carbon atoms such as an ethylene group, a propylene group, a butylene group, a neopentylene group, a 1,5-pentylene group, a 3-methyl-1,5-pentylene group, a 1,6-hexylene group, a methylpentylene group, or a dimethylbutylene group. Among these, Y is preferably a propylene group or an ethylene group and most preferably an ethylene group.

A polyester resin compound having a glycerol skeleton represented by General Formula (1) is obtained by a reaction between glycerol, aromatic polycarboxylic acid in which carboxylic acid is substituted with an ortho position or an anhydride thereof, and a polyhydric alcohol component.

(Polycarboxylic Acid)

Examples of aromatic polycarboxylic acid in which carboxylic acid is substituted with an ortho position or an anhydride thereof include orthophthalic acid or an anhydride thereof, naphthalene 2,3-dicarboxylic acid or an anhydride thereof, naphthalene 1,2-dicarboxylic acid or an anhydride thereof, anthraquinone 2,3-dicarboxylic acid or an anhydride thereof, and 2,3-anthracene carboxylic acid or an anhydride thereof. These compounds may be substituted with a random carbon atom in an aromatic ring. Examples of the substituent include a chloro group, a bromo group, a methyl group, an ethyl group, an i-propyl group, a hydroxyl group, a methoxy group, an ethoxy group, a phenoxy group, a methylthio group, a phenylthio group, a cyano group, a nitro group, an amino group, a phthalimide group, a carboxyl group, a carbamoyl group, an N-ethylcarbamoyl group, a phenyl group, and a naphthyl group.

A polycarboxylic acid component other than the aromatic polycarboxylic acid in which carboxylic acid is substituted with an ortho position or an anhydride thereof may be copolymerized within a range not negatively affecting the effect of the invention. Specifically, succinic acid, adipic acid, azelaic acid, sebacic acid, and dodecanedicarboxylic acid can be used alone or as a mixture of two or more kinds thereof as aliphatic polycarboxylic acid, a maleic anhydride, maleic acid, and fumaric acid can be used alone or as a mixture of two or more kinds thereof as unsaturated bond-containing polycarboxylic acid, 1,3-cyclopentane dicarboxylic acid and 1,4-cyclohexane dicarboxylic acid can be used alone or as a mixture of two or more kinds thereof as alicyclic polycarboxylic acid, polybasic acid of terephthalic acid, isophthalic acid, pyromellitic acid, trimellitic acid, 1,4-naphthalenedicarboxylic acid, 2,5-naphthalenedicarboxylic acid, 2,6-naphthalenedicarboxylic acid, naphthalic acid, biphenyl dicarboxylic acid, diphenic acid and an anhydride thereof, 1,2-bis (phenoxy) ethane-p, p'-dicarboxylic acid, and an anhydride or an ester-forming derivative of these dicarboxylic acid; or p-hydroxybenzoic acid, p-(2-hydroxyethoxy) benzoic acid, and an ester-forming derivative of these dicarboxylic acid can be used alone or as a mixture of two or more kinds thereof as aromatic polycarboxylic acid.

Among these, succinic acid, 1,3-cyclopentane dicarboxylic acid, isophthalic acid, 2,6-naphthalenedicarboxylic acid, 1,8-naphthalic acid, and diphenic acid are preferable.

(Polyhydric Alcohol Components)

Specific examples of the polyhydric alcohol used in the invention include ethylene glycol, propylene glycol, butylene glycol, neopentyl glycol, cyclohexanedimethanol, 1,5-pentanediol, 3-methyl-1,5-pentanediol, 1,6-hexanediol, methylpentanediol, dimethyl butane diol, butyl ethyl propane diol, diethylene glycol, triethylene glycol, tetraethylene glycol, dipropylene glycol, or tripropylene glycol as aliphatic diol, hydroquinone, resorcinol, catechol, naphthalenediol, biphenol, bisphenol A, bisphenol F, or tetramethylbiphenol as aromatic polyhydric phenol, an ethylene oxide elongation product thereof, and an hydrogenated alicyclic group.

It is assumed that, among these, as the number of carbon atoms among the oxygen atoms is small, the molecular chain hardly becomes excessively flexible, and thus, ethylene glycol, propylene glycol, butylene glycol, neopentyl glycol, and cyclohexane dimethanol are preferable, and ethylene glycol is more preferable.

The condensation polymerization reaction between the polycarboxylic acid component and the polyhydric alcohol component can be performed by a well-known typical method.

In the specification, the content of the glycerol skeleton is obtained by calculating the amount of a residue ($C_3H_5O_3$ = 89.07) obtained by removing $R_1$ to $R_3$ of General Formula (1) included with respect to a mass of a total solid content of an organic resin composition for a gas barrier adhesive of the specification, by using Expression (b).
[Expression 2]

[Expression 2]

{[(Glycerol skeleton mol number included in P1 molecule × 89.07/number average molecular weight in P1 molecule)] × used weight of P/total weight of solid contents of organic resin composition for gas barrier adhesive} × 100 (b)

P represents the polyester polyol (B1-3) having a glycerol skeleton.

In the invention, in order to exhibit high gas barrier properties, it is preferable that 5% by mass or more glycerol residue is included in the organic resin composition for a gas barrier adhesive.

[Polyester Polyol (B1-4) Having Isocyanuric Ring]

The polyester polyol (B1-4) used in the invention is polyester polyol (B1-4) having an isocyanuric ring represented by General Formula (3).

[Chem. 3]

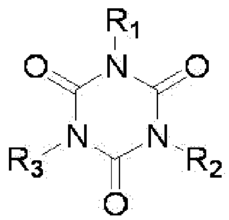

(3)

(In General Formula (3), $R_1$ to $R_3$ each independently represent a $-(CH_2)_{n1}-OH$ (here, n1 represents an integer of 2 to 4) or a group represented by General Formula (4).

[Chem. 4]

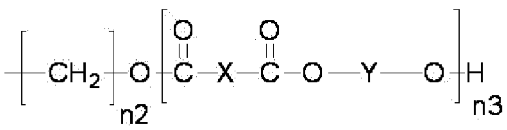

(4)

(In General Formula (4), n2 represents an integer of 2 to 4, n3 represents an integer of 1 to 5, X represents an arylene group selected from the group consisting of a 1,2-phenylene group, a 1,2-naphthylene group, a 2,3-naphthylene group, a 2,3-anthraquinonediyl group, and a 2,3-anthracenediyl group which may have a substituent, and Y represents an alkylene group having 2 to 6 carbon atoms.) Here, at least one of $R_1$, $R_2$, and $R_3$ represents a group represented by General Formula (4).)

In General Formula (3), an alkylene group represented by $-(CH_2)_{n1}-$ may be linear or branched. Among the integers, n1 is preferably 2 or 3 and most preferably 2.

In General Formula (4), n2 represents an integer of 2 to 4 and n3 represents an integer of 1 to 5.

X represents an arylene group which may have a substituent and is selected from the group consisting of a 1,2-phenylene group, a 1,2-naphthylene group, a 2,3-naphthylene group, a 2,3-anthraquinonediyl group, and a 2,3-anthracenediyl group.

In a case where X is substituted with a substituent, X may be substituted with one or a plurality of substituents, and the substituent is bonded with a random carbon atom of X different from a free radical. Examples of the substituent include a chloro group, a bromo group, a methyl group, an ethyl group, an i-propyl group, a hydroxyl group, a methoxy group, an ethoxy group, a phenoxy group, a methylthio group, a phenylthio group, a cyano group, a nitro group, an amino group, a phthalimide group, a carboxyl group, a carbamoyl group, an N-ethylcarbamoyl group, a phenyl group, and a naphthyl group.

Among these, the substituent of X is preferably a hydroxyl group, a cyano group, a nitro group, an amino group,

a phthalimide group, a carbamoyl group, an N-ethylcarbamoyl group, or a phenyl group, and most preferably a hydroxyl group, a phenoxy group, a cyano group, a nitro group, a phthalimide group, or a phenyl group.

In General Formula (4), Y represents an alkylene group having 2 to 6 carbon atoms such as an ethylene group, a propylene group, a butylene group, a neopentylene group, a 1,5-pentylene group, a 3-methyl-1,5-pentylene group, a 1,6-hexylene group, a methylpentylene group, or a dimethylbutylene group. Among these, Y is preferably a propylene group or an ethylene group and most preferably an ethylene group.

In General Formula (3), at least one of $R_1$, $R_2$, and $R_3$ is a group represented by General Formula (4). Particularly, it is preferable that all of $R_1$, $R_2$, and $R_3$ are groups represented by General Formula (4).

In addition, a mixture of any two or more compounds of a compound in which any one of $R_1$, $R_2$, and $R_3$ is a group represented by General Formula (4), a compound in which any two of $R_1$, $R_2$, and $R_3$ are groups represented by General Formula (4), and a compound in which all of $R_1$, $R_2$, and $R_3$ are groups represented by General Formula (4) may be used.

The polyester polyol (B1-4) having an isocyanuric ring represented by General Formula (3) is obtained by a reaction between triol having an isocyanuric ring, aromatic polycarboxylic acid in which carboxylic acid is substituted with an ortho position or an anhydride thereof, and a polyhydric alcohol component.

(Triol Having Isocyanuric Ring)

Examples of triol having an isocyanuric ring include an alkylene oxide adduct of isocyanuric acid such as 1,3,5-tris (2-hydroxyethyl) isocyanuric acid or 1,3,5-tris (2-hydroxypropyl) isocyanuric acid.

(Polycarboxylic Acid)

Examples of aromatic polycarboxylic acid in which carboxylic acid is substituted with an ortho position or an anhydride thereof include orthophthalic acid or an anhydride thereof, naphthalene 2,3-dicarboxylic acid or an anhydride thereof, naphthalene 1,2-dicarboxylic acid or an anhydride thereof, anthraquinone 2,3-dicarboxylic acid or an anhydride thereof, and 2,3-anthracene carboxylic acid or an anhydride thereof. These compounds may be substituted with a random carbon atom in an aromatic ring.

Examples of the substituent include a chloro group, a bromo group, a methyl group, an ethyl group, an i-propyl group, a hydroxyl group, a methoxy group, an ethoxy group, a phenoxy group, a methylthio group, a phenylthio group, a cyano group, a nitro group, an amino group, a phthalimide group, a carboxyl group, a carbamoyl group, an N-ethylcarbamoyl group, a phenyl group, and a naphthyl group.

A polycarboxylic acid component other than the aromatic polycarboxylic acid in which carboxylic acid is substituted with an ortho position or an anhydride thereof may be copolymerized within a range not negatively affecting the effect of the invention. Specifically, succinic acid, adipic acid, azelaic acid, sebacic acid, and dodecanedicarboxylic acid can be used alone or as a mixture of two or more kinds thereof as aliphatic polycarboxylic acid, a maleic anhydride, maleic acid, and fumaric acid can be used alone or as a mixture of two or more kinds thereof as unsaturated bond-containing polycarboxylic acid, 1,3-cyclopentane dicarboxylic acid and 1,4-cyclohexane dicarboxylic acid can be used alone or as a mixture of two or more kinds thereof as alicyclic polycarboxylic acid, polybasic acid of terephthalic acid, isophthalic acid, pyromellitic acid, trimellitic acid, 1,4-naphthalenedicarboxylic acid, 2,5-naphthalenedicarboxylic acid, 2,6-naphthalenedicarboxylic acid, naphthalic acid, biphenyl dicarboxylic acid, diphenic acid and an anhydride thereof, 1,2-bis (phenoxy) ethane-p, p'-dicarboxylic acid, and an anhydride or an ester-forming derivative of these dicarboxylic acid; or p-hydroxybenzoic acid, p-(2-hydroxyethoxy) benzoic acid, and an ester-forming derivative of these dicarboxylic acid can be used alone or as a mixture of two or more kinds thereof as aromatic polycarboxylic acid.

Among these, succinic acid, 1,3-cyclopentane dicarboxylic acid, isophthalic acid, 2,6-naphthalenedicarboxylic acid, 1,8-naphthalic acid, and diphenic acid are preferable.

(Polyhydric Alcohol Components)

Specific examples of the polyhydric alcohol used in the invention include ethylene glycol, propylene glycol, butylene glycol, neopentyl glycol, cyclohexanedimethanol, 1,5-pentanediol, 3-methyl-1,5-pentanediol, 1,6-hexanediol, methylpentanediol, dimethyl butane diol, butyl ethyl propane diol, diethylene glycol, triethylene glycol, tetraethylene glycol, dipropylene glycol, or tripropylene glycol as aliphatic diol, hydroquinone, resorcinol, catechol, naphthalenediol, biphenol, bisphenol A, bisphenol F, or tetramethylbiphenol as aromatic polyhydric phenol, an ethylene oxide elongation product thereof, and an hydrogenated alicyclic group.

It is assumed that, among these, as the number of carbon atoms among the oxygen atoms is small, the molecular chain hardly becomes excessively flexible, and thus, ethylene glycol, propylene glycol, butylene glycol, neopentyl glycol, and cyclohexane dimethanol are preferable, and ethylene glycol is more preferable. The condensation polymerization

reaction between polycarboxylic acid and polyhydric alcohol can be performed by a well-known typical method.

Among these, a polyester polyol compound including an isocyanuric ring, in which 1,3,5-tris (2-hydroxyethyl) isocyanuric acid or 1,3,5-tris (2-hydroxypropyl) isocyanuric acid is used as a triol compound having an isocyanuric ring, orthophthalic anhydride is used as the aromatic polycarboxylic acid in which carboxylic acid is substituted with an ortho position or an anhydride thereof, and ethylene glycol is used as polyhydric alcohol, is preferable from a viewpoint of particularly excellent gas barrier properties and adhesiveness.

The isocyanuric ring has high polarity and is a trifunctional ring. Accordingly, the entire system can have high polarity and crosslink density can be increased. From such a viewpoint, a content of the isocyanuric ring is preferably 5% by mass with respect to a total solid contents of the adhesive resin.

The isocyanuric ring has high polarity and does not form a hydrogen bond. Generally, as a method of increasing adhesiveness, a method of blending high-polarity functional group such as a hydroxyl group, a urethane bond, a ureido bond, or an amide bond is known, but a resin having these bonds easily forms an intermolecular hydrogen bridge, and solubility with respect to ethyl acetate and a 2-butanone solvent often used in a dry laminate adhesive may be deteriorated. However, a polyester resin having an isocyanuric ring does not cause deterioration in solubility, and thus, dilution can be easily performed.

In addition, since the isocyanuric ring is a trifunctional ring, a polyester polyol compound having an isocyanuric ring as a center of a resin skeleton and having a polyester skeleton having a specific structure in the branched chains can obtain high crosslink density. It is assumed that, by increasing crosslink density, it is possible to reduce the number of gaps through which gas such as oxygen flows. As described above, it is assumed that, the isocyanuric ring does not form an intermolecular hydrogen bridge, and has high polarity and high crosslink density, and accordingly, gas barrier properties and dry laminate adhesiveness can be maintained.

In the specification, a content of the isocyanuric ring is obtained by calculating the amount of a residue ($C_3N_3O_3$ = 126.05) obtained by removing $R_1$ to $R_3$ of General Formula (3) included with respect to a mass of a total solid content of the composition, by using Expression (c).

[Expression 3]

{[(Isocyanuric ring mol number included in P1 molecule × 126.05/number average molecular weight in P1 molecule)] × used weight of P/total weight of solid contents of organic resin composition for gas barrier adhesive} × 100 (c)

P represents the polyester polyol (B1-4) having an isocyanuric ring.

The reaction of the polyester polyol having an isocyanuric ring can be performed by a well-known typical method. As a specific example, triol having an isocyanuric ring used as a raw material, aromatic polycarboxylic acid in which carboxylic acid is substituted with an ortho position or an anhydride thereof, and a polyhydric alcohol component may be collectively put and heated while stirring and mixing, to cause a dehydration condensation reaction.

The polyol (B1) is used to form a gas barrier adhesive and the polyol (B1) has a permachor value of 44 to 60, preferably 44 to 55, per 1 mol of residues excluding terminal hydroxyl groups. When the permachor value is smaller than 44, oxygen barrier properties may be less likely to occur, and when the permachor value is greater than 60, it may tend to be less soluble in a solvent in a case where it is used to form a solvent type adhesive. The permachor value of the polyol (B1) can be calculated from a permachor value or values corresponding to the polymer segment shown in Table 1.

[Table 1]

| Table 1 Polymer main chain segment | Permachor value | Polymer side chain segment | Permachor value |
|---|---|---|---|
| 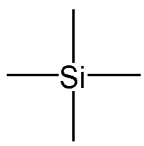 | -146 | $-CH_3$ | 15 |

(continued)

| Table 1 Polymer main chain segment | Permachor value | Polymer side chain segment | Permachor value |
|---|---|---|---|
| 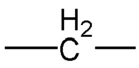 | 15 | 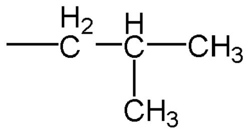 | -1 |
| 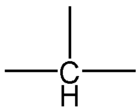 | 0 | 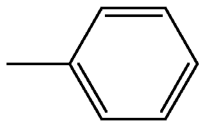 | 39 |
| 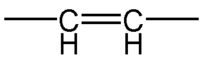 | -12 | 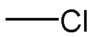 | 108 |
| 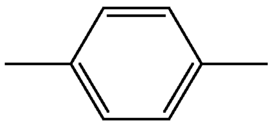 | 60 | 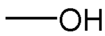 | 255(dry) 100(wet) |
| 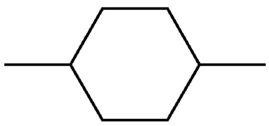 | -54 | 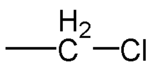 | 50 |
| 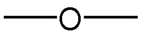 | 70 (dry) | 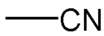 | 190 |
| 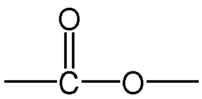 | 102 | 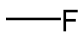 | 85 |
| 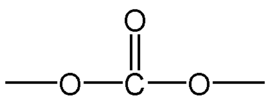 | 24 | | |
| 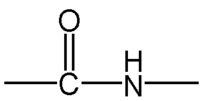 | 309 (dry) 260 (wet) | | |
| 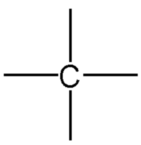 | -50 | | |

For example, a permachor value P per 1 mol of a residue excluding a terminal hydroxyl group of ethylene glycol phthalate ester having a molecular weight of 600 shown in General Formula (5) can be obtained as follows.

[Chem. 5]

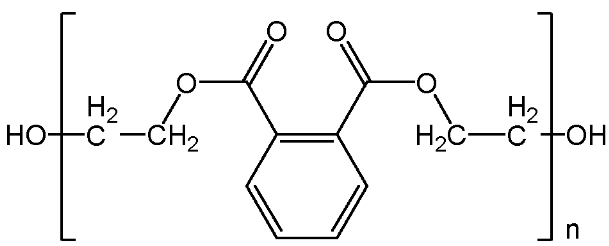

(5)

[Table 2]

| Table 2 | Mol number | Mol number × Permachor value |
|---|---|---|
| 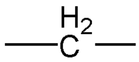 | 2+2n | 15× (2+2n) |
| 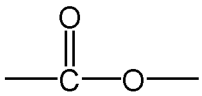 | 2n | 102×2n |
| 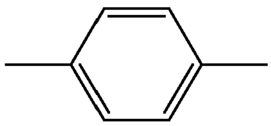 | n | 60×n |
| Total | 2+5n | 294n+30 |

[Expression 4]

$$P=(294n+30)/(2+5n)$$

Since an average repeating number n is 2.76, the permachor value P per 1 mol of a residue excluding a terminal hydroxyl group is 53.3.

The polyol (B1) is preferably amorphous. Accordingly, even in a case where the isocyanate compound (B2) which will be described later is reacted and cured, flexibility can be maintained and it is advantageous for exhibition of adhesiveness.

In order to obtain such amorphous polyol, a method of introducing a structure which can easily introduce an asymmetric structure by using a main chain as an axis, or mixing crystalline polyols with each other at a high temperature is used.

A hydroxyl value of the polyol (B1) is preferably 40 mgKOH/g to 500 mgKOH/g and more preferably 50 mgKOH/g to 350 mgKOH/g. Accordingly, excellent viscosity stability after mixing with the isocyanate compound (B2) is obtained.

The hydroxyl value can be measured by a hydroxyl value measurement method disclosed in JIS-K0070.

In the invention, the laminate is preferably formed by using an adhesive including the polyol (B1) having gas barrier properties and a high permachor value.

Generally, in a case where a number average molecular weight of the polyol having a high permachor value is great (for example, approximately 5,000 to 10,000), viscosity extremely increases, and coating workability is deteriorated. In addition, in a case of using a solvent type adhesive, solubility with respect to a solvent is deteriorated, and problems regarding storage stability such as gelation or decoloration occur. In a case of forming an adhesive layer by using polyol having a low molecular weight (number average molecular weight equal to or smaller than 2,300) for avoiding such defects, the printing layer may be redissolved.

In the laminate of the invention, the printing layer is formed by using the printing ink composition (A), and thus, the defects can be prevented and a laminate having excellent gas barrier properties can be obtained.

In addition, in a case of forming the adhesive layer by using the two-component polyurethane-based adhesive (B) having gas barrier properties, the printing layer may be redissolved due to polyol. In this case, the redissolved printing layer is mixed with a part of the adhesive. The adhesive mixed with the redissolved printing layer cannot exhibit sufficient gas barrier properties depending on the kind of the binder used in the ink. However, the printing layer of the laminate of the invention is formed of the printing ink composition (A) including the urethane resin (A1) and the vinyl chloride vinyl acetate copolymer resin (A2), and therefore, it is possible to maintain gas barrier properties, even in a state where the redissolved printing layer is mixed with the adhesive layer.

A lower limit value of the number average molecular weight of the polyol (B1) is not particularly limited. However, in a case where the molecular weight is excessively small, the printing layer is easily redissolved, even in a case of using the printing ink composition (A), and unreacted polyol (B1) flows out from the adhesive layer, and thus, the lower limit is preferably equal to or greater than 500. The number average molecular weight of the polyol (B1) is preferably 700 to 2,000. Accordingly, it is possible to ensure coating workability and storage stability of the two-component polyurethane-based adhesive (B), while substantially preventing the remelting of the printing layer.

The polyol (B1) can be used in combination with well-known additives selected according to the kind thereof.

Examples thereof include a silane coupling agent such as a hydrolyzable alkoxysilane compound, a titanate-based coupling agent, an aluminum-based coupling agent, and an adhesion accelerator such as an epoxy resin. In addition, various levelling agents may be added, in order to smooth the coated surface at the time of coating laminate.

(Isocyanate Compound (B2))

The isocyanate compound (B2) used in the adhesive layer of the invention is not particularly limited and well-known compounds can be used. Examples thereof include aromatic aliphatic diisocyanate, a tri- or higher valent polyisocyanate compound, and any of a low-molecular compound and a high-molecular compound may be used.

For example, an adduct obtained by a reaction between tetramethylene diisocyanate, hexamethylene diisocyanate, toluene diisocyanate, diphenylmethane diisocyanate, hydrogenated diphenylmethane diisocyanate, xylylene diisocyanate, hydrogenated xylylene diisocyanate, isophorone diisocyanate, a trimer of these isocyanate compounds, an excessive amount of these isocyanate compounds, and a low-molecular active hydrogen compound, for example, ethylene glycol, propylene glycol, metaxylylene alcohol, 1,3-bishydroxyethylbenzene, 1,4-bishydroxyethylbenzene, trimethylolpropane, glycerol, pentaerythritol, erythritol, sorbitol, ethylenediamine, monoethanolamine, diethanolamine, triethanolamine, or metaxylylenediamine and an alkylene oxide adduct thereof, or a high-molecular active hydrogen compound such as various polyester resins, polyether polyols, or polyamides, a biuret obtained by a reaction between isocyanurate which is a polymer of diisocyanate, an allophanate, and amine, and the like are used.

In addition, blocked Isocyanate may be used as the isocyanate compound (B2). Examples of an isocyanate blocking agent include phenols such as phenol, thiophenol, methylthiophenol, ethylthiophenol, cresol, xylenol, resorcinol, nitrophenol, or chlorophenol, oximes such as acetoxime, methyl ethyl ketoxime, or cyclohexanone, alcohols such as methanol, ethanol, propanol, or butanol, halogen-substituted alcohols such as ethylene chlorohydrin or 1,3-dichloro-2-propanol, tertiary alcohols such as t-butanol or t-pentanol, and lactams such as ε-caprolactam, δ-valerolactam, γ-butyrolactam, or β-propiolactam. In addition, an active methylene compound such as aromatic amines, imides, acetylacetone, acetoacetic ester, or malonic acid ethyl ester, mercaptans, imines, ureas, diaryl compounds, sodium bisulfite, and the like are used. The blocked isocyanate is obtained by adding and reaction of the isocyanate compound and the isocyanate blocking agent by a well-known typical method.

In a case of providing gas barrier properties for the adhesive layer, a mixture of a tri- or higher valent polyisocyanate compound (b1) having an aromatic ring in a molecule, and a polyisocyanate compound (b2) not having an aromatic ring in a molecule is preferable. Accordingly, even in a case where the number average molecular weight of the polyol is comparatively small which is 500 to 2,300, as in the invention, it is possible to satisfy both excellent coating adaptability and laminate strength of the laminate, and it is possible to improve gas barrier properties.

The tri- or higher valent polyisocyanate compound (b1) having an aromatic ring in a molecule has a function of three-dimensionally crosslinking and hardening a main chain of polyol. Accordingly, in a case where the amount of the polyisocyanate compound (b1) used is excessively small, peeling (delamination) of the adhesive layer may occur, under condition where heat is applied such as boiling or retort process. The number of functional groups of the polyisocyanate compound (b1) is not particularly limited, and in a case of tri- or higher functional polyisocyanate compound, it is possible to exhibit a function of crosslinking and hardening of the polyol. Accordingly, trivalent polyisocyanate which is generally easily prepared is preferably used.

As the polyisocyanate compound (b1), an adduct obtained by a reaction between an excessive amount of a monomer or an oligomer of diisocyanate having an aromatic ring such as xylene diisocyanate, toluene diisocyanate, or diphenylmethane diisocyanate, and a low-molecular active hydrogen compound such as alcohol including three or more hydroxyl group such as trimethylolpropane, glycerol, pentaerythritol, erythritol, or sorbitol, diethanolamine, triethanolamine, and alkylene oxide adduct thereof, or a high-molecular active hydrogen compound such as various polyester resins, polyether polyols, or polyamides is used.

In a case where all of the isocyanate compounds used in the adhesive layer have an aromatic ring, the adhesive layer becomes excessively hard, and excellent adhesion strength for the laminate used for packaging or the like may not be obtained. By using the polyisocyanate compound (b2) not having an aromatic ring in a molecule, particularly, a diisocyanate compound of an allophanate in combination, flexibility is applied to the adhesive layer while maintaining the gas barrier properties, and adhesiveness with respect to a metal base material such as aluminum foil, an aluminum vapor deposition film, or a transparent vapor deposition film is improved.

As the polyisocyanate compound (b2), a material selected from the group consisting of a reaction product of hexamethylene diisocyanate, norbornane diisocyanate, isophorone diisocyanate, and at least one diisocyanate selected from a hydrogenated product such as metaxylene diisocyanate, toluene diisocyanate, methylphenylethane diisocyanate, and naphthalene-1,5-diisocyanate, and monovalent alcohol (allophanate group-containing polyisocyanate), and a reaction product of alcohol having two hydroxyl groups can be preferably used.

A mixing ratio of the polyisocyanate compound (b1) and the polyisocyanate compound (b2) is preferably 1:5 to 10:1 and more preferably 1:3 to 5:1 in terms of isocyanate content.

(Additive)

The adhesive layer of the invention may be formed by using the two-component polyurethane-based adhesive (B) obtained by blending various additives, within a range not negatively affecting adhesiveness, in addition to the polyol (B1) and the isocyanate compound (B2). Examples of the additive include an inorganic filler such as silica, alumina, aluminum flakes, or glass flakes, a stabilizer (an antioxidant, a thermal stabilizer, or an ultraviolet absorber), a plasticizer, an antistatic agent, a lubricant, an antiblocking agent, a colorant, a filler, and a crystal nucleus agent.

In order to improve acid resistance of the adhesive layer, a well-known acid anhydride can also be used in combination with additives. Examples of the acid anhydride include phthalic anhydride, succinic anhydride, Het acid anhydride, Himic acid anhydride, maleic anhydride, tetrahydrophthalic anhydride, hexahydra phthalic anhydride, tetrapromophthalic anhydride, tetrachlorophthalic anhydride, trimellitic anhydride, pyromellitic anhydride, benzophenotetracarboxylic anhydride, 2,3,6,7-naphthalene tetracarboxylic acid dianhydride, 5-(2,5-oxotetrahydrofuryl)-3-methyl-3-cyclohexene-1,2-dicarboxylic anhydride, and styrene maleic anhydride copolymer.

In order to improve adhesiveness with respect to various film materials immediately after the coating, a tackifier such as a xylene resin, a terpene resin, a phenol resin, or a rosin resin may be added. In a case of adding these, a content thereof is preferably 0.01 parts by mass to 5 parts by mass with respect to 100 parts by mass of a total amount of polyol and isocyanate.

In a case where gas barrier properties are necessary for the adhesive layer, at least one of a plate-shaped inorganic compound and crystalline polyester is preferably included.

Examples of the plate-shaped inorganic compound include hydrous silicate (phyllosilicate mineral or the like), kaolinite-serpentine viscosity mineral (halloysite, kaolinite, endelite, dickite, Nakright, Antigorite, Chrysotile, or the like), pyrophylite-talcs (pyrophyllite, talc, kaolite, or the like), smectite group viscosity mineral (montmorillonite, beidellite, nontronite, saponite, hectorite, sauconite, stevensite, or the like), vermiculite group viscosity mineral (vermiculite or the like), mica or mica group viscosity mineral (mica such as muscovite or phlogopite, margarite, tetrasilicic mica, teniolite, or the like), chlorite (Cuckeite, Sudoite, Clinochloa, Chamosite, Nimite, or the like), hydrotalcite, tabular barium sulfate, boehmite, and aluminum polyphosphate. These minerals may be a natural viscosity mineral or a synthesis viscosity mineral. The plate-shaped inorganic compound is used alone or in combination of two or more kinds thereof.

Presence or absence of charges between layers of the plate-shaped inorganic compound does not directly affect gas barrier properties of the adhesive layer, but an ionic inorganic compound has significantly deteriorated dispersibility with respect to polyol. In a case where an added amount thereof is excessively great, coating adaptability becomes a problem (thixotropy). With respect to this, in an uncharged case (non-expansiveness), coating adaptability can be ensured, even in a case where the added amount thereof is great.

In a case where an average particle diameter of the plate-shaped inorganic compound is equal to or greater than 0.1 μm, gas barrier properties are easily exhibited, and in a case where the average particle diameter thereof is excessively small, excellent gas barrier properties are not obtained. In a case of performing the coating by gravure printing and the average particle diameter is excessively great, the plate-shaped inorganic compound is not fit to a photogravure cylinder, and thus, coating adaptability is deteriorated. Accordingly, the average particle diameter of the plate-shaped inorganic compound is preferably 0.1 μm to 100 μm and more preferably 0.1 μm to 40 μm. In the specification, the average particle diameter is a particle diameter having highest frequency of appearance, in a case where particle size distribution of the plate-shaped inorganic compound is measured by a light scattering type measurement device.

The amount of the plate-shaped inorganic compound added is not particularly limited, as long as gas barrier properties are improved, and a content thereof is preferably 5 parts by mass to 50 parts by mass, in a case where a total mass of the polyol, the isocyanate compound, and the plate-shaped inorganic compound is set as 100 parts by mass.

The crystalline polyester is not particularly limited, and well-known crystalline polyester can be used. In the specification, crystallinity indicates that an endothermic energy amount at an endothermic peak corresponding to a melting point obtained by a differential thermal analysis method (DSC) is equal to or greater than 20 J/g and more preferably equal to or greater than 30 J/g under the heating condition of 20 °C/min. The crystalline polyester satisfies crystalline conditions described above.

The added amount of the crystalline polyester is preferably 2% by mass to 50% by mass and more preferably 5% by mass to 40% by mass with respect to a total mass of polyol. Accordingly, it is possible to satisfy improvement of gas barrier properties and coating adaptability of the dry laminate adhesive.

(Adhesive Layer)

The adhesive layer is formed by applying the two-component polyurethane-based adhesive (B) obtained by mixing the polyol (B1), the isocyanate compound (B2), and if necessary, additives, on the printing layer.

The adhesive may have any aspect of a solvent type or a non-solvent type. In a case of a solvent type, the

solvent may be used as a reaction medium in a case of manufacturing a first agent and/or a second agent. In addition, the solvent is used as a diluent in a case of the coating. Examples of the solvent to be used include esters such as ethyl acetate, butyl acetate, cellosolve acetate, ketones such as acetone, methyl ethyl ketone, isobutyl ketone, or cyclohexanone, ethers such as tetrahydrofuran or dioxane, aromatic hydrocarbons such as toluene or xylene, halogenated hydrocarbons such as methylene chloride or ethylene chloride, dimethyl sulfoxide, and dimethyl sulfoamide. A suitable solvent may be selected according to the kind of the first agent and the second agent, and ethyl acetate or methyl ethyl ketone is suitably used.

Regarding the polyol (B1) and the isocyanate compound (B2), an equivalent ratio of a hydroxyl group of the polyol (B1) and a functional group of the isocyanate compound (B2) is preferably 1/0.5 to 1/10 and more preferably 1/1 to 1/5. In a case where the equivalent ratio is greater than the range described above and the amount of the isocyanate compound (B2) is excessive, a residual curing agent component remains, and accordingly, the component may flow out from the adhesive layer after the adhesion. On the other hand, in a case where the isocyanate compound (B2) is insufficient, the adhesion strength may be insufficient.

The polyol (B1) and the isocyanate compound (B2) are preferably used in combination so that a glass transition temperature of a cured coating film is 30°C to 80°C, are more preferably used in combination so that the glass transition temperature is 0°C to 70°C, and even more preferably used in combination so that the glass transition temperature is 25°C to 70°C. In a case where the glass transition temperature is higher than 80°C, flexibility of the cured coating film at approximate room temperature becomes low, and accordingly, adhesiveness with respect to the base material may be deteriorated. In addition, in a case where the glass transition temperature is lower than -30°C, a molecular motion of the cured coating film at approximate room temperature is fast, and a cohesive force may be insufficient. In any case, adhesiveness may be deteriorated.

<Laminate>

In the laminate of the invention, the printing layer is formed by using the printing ink composition (A) including the urethane resin (A1) and the vinyl chloride vinyl acetate copolymer resin (A2) as the binder, and accordingly, desired gas barrier properties can be maintained by using the two-component polyurethane-based adhesive (B) having gas barrier properties. Regarding the two-component polyurethane-based adhesive (B), in a case of using the polyol (B1) having an ortho-oriented aromatic ring, higher gas barrier properties are obtained, and in a case of using the isocyanate curing agent in combination with the printing layer, it is possible to decrease remelting properties of the printing layer and it is possible to obtain a laminate having high gas barrier properties.

A base material used at this time affects the gas barrier properties. In a laminate in which a so-called plastic film such as a polyolefin film, a polyvinyl alcohol film, or an ethylene-vinyl alcohol copolymer film such as a PET film, a polystyrene film, a polyamide film, a polyacrylonitrile film, a polyethylene film (LLDPE: low density polyethylene film, HDPE: high density polyethylene film), or a polypropylene film (CPP: unstretched polypropylene film, OPP: biaxially stretched polypropylene film) is used as a base material in the first and second base materials, the printing ink composition (A) using the isocyanate curing agent as the printing layer is preferable, from a viewpoint of maintaining high gas barrier properties. Meanwhile, in a case of using a film obtained by laminating an overlayer of metal such as aluminum or metal oxide such as silica or alumina, or a gas barrier film such as polyvinyl alcohol an ethylene-vinyl alcohol copolymer, or vinylidene chloride in one or both of the first and second base materials, higher gas barrier properties can be maintained, even in a case of using the isocyanate curing agent as the printing layer.

In addition to the gas barrier properties applied to the adhesive, the laminate using the gas barrier film as the base material can have more excellent barrier properties with respect to scent caused by oxygen, alcohol, inert gas, and a volatile organic solvent, in addition to vapor barrier properties.

Alcohol which can be blocked by the laminate of the invention is not particularly limited, as long as it has a structure in which a hydroxyl group is bonded to an alkyl chain at least one portion, and it is a material generally classified to alcohols. In addition, alcohol may be monohydric alcohol or polyhydric alcohol. Examples of monohydric alcohol include methanol, ethanol, 1-propanol, 2-propanol, butanol, pentanol, neopentyl glycol, hexanol, benzyl alcohol, allyl alcohol, and cyclohexanol. In addition, examples of polyhydric alcohol include ethylene glycol, propanediol, butanediol, glycerin, and trimethylpropane. Further, in addition to amino alcohols such as N, N-diethylethanolamine, N, N-dimethylethanolamine, N-methyldiethanolamine, or N-ethylethanolamine, an ether group-containing alcohol compound such as diethylene glycol or triethylene glycol is also used.

The laminate described above can be particularly suitably used with respect to alcohol in a state of air to liquid in a room temperature region.

Examples of inert gas which can be blocked by the laminate of the invention include noble gas such as helium, neon, argon, krypton, xenon, or radon, in addition to nitrogen and carbon gas. A chemical change of such inert gas hardly occurs, and the inert gas is not only inert to food and the like, but also, it is possible to prevent a contact of oxygen or vapor to a food range, and accordingly, the inert gas is used for maintaining a taste of food, holding contents, and

preventing oxidation.

Examples of the volatile organic compound (scent) which can be blocked by the laminate of the invention include a sanitary field including a scent ingredient of cocoa, soy sauce, sauce, miso, coffee, lemonene, methyl salicylate, menthol, cheese, fragrance, shampoo, rinse, detergent, softener, or soap, pet food, insecticide, fragrance, hair dye, perfume, and pesticides.

<<Method for Manufacturing Laminate>>

A method for manufacturing the laminate of the invention includes a printing layer forming step of forming a printing layer by using the printing ink composition (A) on the first base material, an adhesive layer forming step of applying the two-component polyurethane-based adhesive (B) on the printing layer, and a laminate step of bonding the first base material and the second base material together with the adhesive layer.

(Printing Layer Forming Step)

In the printing layer forming step, the printing layer is formed by performing the printing on the first base material by using the printing ink composition (A). Examples of the printing method include a gravure coating method, a flexo coating method, a roll coating method, a bar coating method, a die coating method, a curtain coating method, and a spin coating method. This is left still or blowing, heating, or drying under reduced pressure is performed, if necessary, and accordingly, the printing layer is formed. The printing or coating is performed so that a film thickness of the printing layer is approximately 1 μm to 7 μm in a dry state. The film thickness is more preferably approximately 1 μm to 3 μm.

(Adhesive Layer Forming Step)

Next, the two-component polyurethane-based adhesive (B) is applied on the printing layer. The coating method is particularly limited, and a well-known method can be used. As an example, in a case of a solvent type capable of adjusting the viscosity, the coating is performed by a gravure roll coating system, in many cases. In a case where the adhesive is a non-solvent type, has high viscosity at room temperature, and is not suitable for gravure rolling coating, it is possible to perform the coating with a roll coater while heating. In a case of using a roll coater, it is preferable to perform the coating in a state where heating is performed to room temperature to 120°C, so that the viscosity of the two-component polyurethane-based adhesive (B) is 500 mPa·s to 2,500 mPa·s.

A coating amount of the two-component polyurethane-based adhesive (B) is preferably 2.0 $g/m^2$ to 7.0 $g/m^2$ and more preferably 3.0 $g/m^2$ to 6.0 $g/m^2$. Accordingly, it is possible to improve coating workability in a case of bonding the base materials to each other (for example, wettability or initial stickiness) and improve physical properties such as adhesion strength (for example, laminate strength or sealing strength).

(Laminate step)

Next, the laminate of the invention is obtained by bonding the second base material by superimposing and lamination. As a lamination method, a well-known method such as dry lamination, non-solvent lamination, or extrusion lamination can be used.

In a case of performing the lamination by a dry lamination method, the adhesive is applied by a gravure rolling method and the second base material is superimposed and bonded thereto. A temperature of a laminate roll is preferably approximately room temperature to 60°C.

In a case of performing the lamination by a non-solvent lamination method, the adhesive is heated to approximately room temperature to 120°C in advance, the coating is performed by a roll such as a roll coater heated to approximately room temperature to 120°C, and the second base material is immediately bonded to the surface thereof, and accordingly, the laminate is obtained. A laminate pressure is preferably approximately 10 to 300 $kg/cm^2$.

In a case of performing the lamination by an extrusion lamination, the coating of the organic solvent solution of the two-component polyurethane-based adhesive (B) as an adhesive assistant (anchor coat agent) is performed by a roll such as a gravure roll, a drying and curing reaction of the solvent is performed at room temperature to 140°C, a polymer material melted by an extruder is laminated, and accordingly, the laminate can be obtained. As the polymer material to be melted, a low-density polyethylene resin or a linear low-density polyethylene resin, or a polyolefin-based resin such as an ethylene-vinyl acetate copolymer resin is preferable.

The laminate manufactured as described above is preferably subjected to aging treatment. As an example, the aging conditions in a case of using the polyisocyanate compound as a curing agent are a temperature of room temperature to 80°C and time of 12 to 240 hours. During this treatment, the adhesion strength increases.

The laminate of the invention can be suitably used for various purposes such as a packaging material, a solar

cell protective film, an electronic material such as a gas barrier substrate for a display device, a building material, or an industrial material.

[Examples]

Hereinafter, for easy understanding of the invention, the invention will be described specifically with reference to examples, but the invention is not limited to the examples only. In addition, a part and % in each example are based on mass, unless otherwise noted.

<Production of Urethane Resin (A1)>

To a four-neck flask equipped with a stirrer, a thermometer, a reflux condenser tube, and a nitrogen gas-introducing tube were added 605.9 parts of a polyester diol having a number average molecular weight of 1,800 which was obtained by a reaction between a mixture of ethylene glycol and neopentyl glycol (molar ratio = 1/1) and adipic acid, and 94.1 parts of isophorone diisocyanate, and then allowed to react at 90°C for 10 hours under a nitrogen gas stream, so that a prepolymer having free isocyanate value of 1.02% by mass was produced. Subsequently, 300 parts of ethyl acetate was added thereto to form a uniform solution of a urethane prepolymer. Then, the urethane prepolymer solution was added to a mixture of 18.1 parts of isophoronediamine, 873 parts of ethyl acetate, and 503 parts of IPA, and stirred and allowed to react at 45°C for 8 hours, so that a polyurethane polyurea resin solution was obtained. The solid in the resulting polyurethane polyurea resin solution was named urethane resin (A1) and used in examples and comparative examples.

<Production of Polyol (B1)>

(Production Example 1) Production of Polyester Polyol "EGoPA 900" Having Number Average Molecular Weight of 900 and Composed of Ethylene Glycol and Orthophthalic Acid

To a polyester reaction vessel equipped with a stirrer, a nitrogen gas-introducing tube, a Snider tube, and a condenser were added 747.31 parts of ethylene glycol, 1252.70 parts of phthalic anhydride, and 0.02 parts of titanium tetraisopropoxide, and slowly heated so that the temperature of the upper portion of the rectifying tube did not exceed 100°C and thus the internal temperature was held at 220°C. When the acid value reached 4 mgKOH/g or less, the esterification reaction was finished, so that a polyester polyol "EGoPA 900" having a number average molecular weight of 900 was obtained. The number n of repeats in the polyester polyol was 3.94, and the permachor value of the polyester polyol was 54.8 with respect to residues excluding terminal hydroxyl groups. The polyester polyol had a hydroxyl value of 120.9.

(Production Example 2) Production of Polyester Polyol "EGoPA 1100" Having Number Average Molecular Weight of 1,100 and Composed of Ethylene Glycol and Orthophthalic Acid

To a polyester reaction vessel equipped with a stirrer, a nitrogen gas-introducing tube, a Snider tube, and a condenser were added 747.31 parts of ethylene glycol, 1252.70 parts of phthalic anhydride, and 0.02 parts of titanium tetraisopropoxide, and slowly heated so that the temperature of the upper portion of the rectifying tube did not exceed 100°C and thus the internal temperature was held at 220°C. When the acid value reached 4 mgKOH/g or less, the esterification reaction was finished, so that a polyester polyol "EGoPA 1100" having a number average molecular weight of 1,100 was obtained. The number n of repeats in the polyester polyol was 4.82, and the permachor value of the polyester polyol was 55.4 with respect to residues excluding terminal hydroxyl groups. The polyester polyol had a hydroxyl value of 102.7.

(Production Example 3) Production of Polyester Polyol "EGoPA 1300" Having Number Average Molecular Weight of 1300 and Composed of Ethylene Glycol and Orthophthalic Acid

To a polyester reaction vessel equipped with a stirrer, a nitrogen gas-introducing tube, a Snider tube, and a condenser were added 747.31 parts of ethylene glycol, 1252.70 parts of phthalic anhydride, and 0.02 parts of titanium tetraisopropoxide, and slowly heated so that the temperature of the upper portion of the rectifying tube did not exceed 100°C and thus the internal temperature was held at 220°C. When the acid value reached 4 mgKOH/g or less, the esterification reaction was finished, so that a polyester polyol "EGoPA 1300" having a number average molecular weight of 1,300 was obtained. The number n of repeats in the polyester polyol was 5.70, and the permachor value of the polyester polyol was 55.9 with respect to residues excluding terminal hydroxyl groups. The polyester polyol had a hydroxyl

value of 87.6.

(Production Example 4) Production of Polyester Polyol "EGoPA 2100" Having Number Average Molecular Weight of 2,100 and Composed of Ethylene Glycol and Orthophthalic Acid

To a polyester reaction vessel equipped with a stirrer, a nitrogen gas-introducing tube, a Snider tube, and a condenser were added 747.31 parts of ethylene glycol, 1252.70 parts of phthalic anhydride, and 0.02 parts of titanium tetraisopropoxide, and slowly heated so that the temperature of the upper portion of the rectifying tube did not exceed 100°C and thus the internal temperature was held at 220°C. When the acid value reached 4 mgKOH/g or less, the esterification reaction was finished, so that a polyester polyol "EGoPA 2100" having a number average molecular weight of 2,100 was obtained. The number n of repeats in the polyester polyol was 9.20, and the permachor value of the polyester polyol was 57.0 with respect to residues excluding terminal hydroxyl groups. The polyester polyol had a hydroxyl value of 54.0.

(Production Example 5) Production of Polyester Polyol "EGoPA 2500" Having Number Average Molecular Weight of 2,500 and Composed of Ethylene Glycol and Orthophthalic Acid

To a polyester reaction vessel equipped with a stirrer, a nitrogen gas-introducing tube, a Snider tube, and a condenser were added 747.31 parts of ethylene glycol, 1252.70 parts of phthalic anhydride, and 0.02 parts of titanium tetraisopropoxide, and slowly heated so that the temperature of the upper portion of the rectifying tube did not exceed 100°C and thus the internal temperature was held at 220°C. When the acid value reached 4 mgKOH/g or less, the esterification reaction was finished, so that a polyester polyol "EGoPA 2500" having a number average molecular weight of 2,500 was obtained. The number n of repeats in the polyester polyol was 10.95, and the permachor value of the polyester polyol was 57.3 with respect to residues excluding terminal hydroxyl groups. The polyester polyol had a hydroxyl value of 42.8.

<Manufacturing of Laminate>

(Example 1)

The printing ink composition (A) was prepared with the composition shown in Table 3. This was printed on the first base material and dried to form a printing layer.

Subsequently, the two-component polyurethane-based adhesive (B) was prepared with the composition shown in Table 3, then applied onto the printing layer, and then bonded with the second base material, so that a laminate of Example 1 was obtained. The combination of the base materials used, specifically, the combination of the first base material/the second base material used was a combination of a PET film having a thickness of 12 μm ("E-5100" manufactured by Toyobo Co., Ltd.)/an unstretched PP film having a thickness of 70 μm ("ZK-93KM" manufactured by Toray Advanced Film Co, Ltd.) (hereinafter, abbreviated as PET/CPP) or a combination of a PET film having a thickness of 12 μm ("E-5100" manufactured by Toyobo Co., Ltd.)/an aluminum vapor-deposited unstretched PP film having a thickness of 25 μm ("2203" manufactured by Toray Advanced Film Co, Ltd.) (hereinafter, abbreviated as

PET/VMCPP).

(Examples 2 to 7)

Laminates of Examples 2 to 7 were obtained in the same manner as in Example 1, except that the added amount of an ethyl acetate solution of a HDI adduct and the composition of the two-component polyurethane-based adhesive (B) were set as shown in Table 3.

(Examples 8 to 13)

Laminates of Examples 8 to 13 were obtained in the same manner as in Example 1, except that an ethyl acetate solution of a HDI adduct was not added and the composition of the two-component polyurethane-based adhesive (B) was set as shown in Table 4.

(Comparative Examples 1 to 6)

The printing ink composition (A) was prepared with the composition shown in Table 5, then printed on a PET

film having a thickness of 12 μm ("E-5100" manufactured by Toyobo Co., Ltd.), and then dried to form a printing layer.

Laminates of Comparative Examples 1 to 6 were obtained in the same manner as in Example 1, except the composition of the two-component polyurethane-based adhesive (B) was set as shown in Table 5.

[Table 3]

| Table 3 | | | Example 1 | Example 2 | Example 3 | Example 4 | Example 5 | Example 6 | Example 7 |
|---|---|---|---|---|---|---|---|---|---|
| | | | Vinyl chloride vinyl acetate/ urethane | Vinyl chloride vinyl acetate/ urethane | Vinyl chloride vinyl acetate/ urethane | Vinyl chloride vinyl acetate/ urethane | Vinyl chloride vinyl acetate/ urethane | Vinyl chloride vinyl acetate/ urethane | Vinyl chloride vinyl acetate/ urethane |
| Printing layer | Printing ink composition (A) | Titanium oxide pigment | 35 | 35 | 35 | 35 | 35 | 35 | 35 |
| | | Isopropyl alcohol | 13.5 | 13.5 | 13.5 | 13.5 | 13.5 | 13.5 | 13.5 |
| | | Ethyl acetate | 41.7 | 41.7 | 41.7 | 41.7 | 41.7 | 41.7 | 41.7 |
| | | Vinylchloridevinyl acetate copolymer resin (A2) | 1 | 1 | 1 | 1 | 1 | 1 | 1 |
| | | Urethane resin (A1) | 8 | 8 | 8 | 8 | 8 | 8 | 8 |
| | | Styrene maleic acid resin | 0.8 | 0.8 | 0.8 | 0.8 | 0.8 | 0.8 | 0.8 |
| | | Total | 100 | 100 | 100 | 100 | 100 | 100 | 100 |
| | NCO curing agent | HDI adduct | 4 | 6 | 8 | 8 | 8 | 8 | 4 |

(continued)

| Table 3 | | | Example 1 | Example 2 | Example 3 | Example 4 | Example 5 | Example 6 | Example 7 |
|---|---|---|---|---|---|---|---|---|---|
| | | | Vinyl chloride vinyl acetate/ urethane | Vinyl chloride vinyl acetate/ urethane | Vinyl chloride vinyl acetate/ urethane | Vinyl chloride vinyl acetate/ urethane | Vinyl chloride vinyl acetate/ urethane | Vinyl chloride vinyl acetate/ urethane | Vinyl chloride vinyl acetate/ urethane |
| Adhesive layer | Polyol (B1) | EGOPA 900 | 50 | 50 | 50 | | | | 50 |
| | | EGOPA 1100 | | | | 50 | | | |
| | | EGOPA 1300 | | | | | 50 | | |
| | | EGOPA 2100 | | | | | | 50 | |
| | | EGOPA 2500 | | | | | | | |
| | | HM6025 | 20 | 20 | 20 | 20 | 20 | 20 | 0 |
| | | Ethyl acetate | 30 | 30 | 30 | 30 | 30 | 30 | 50 |
| | | Total | 100 | 100 | 100 | 100 | 100 | 100 | 100 |
| | NCO compound (B2) | TAKENATE 500 | 7 | 7 | 7 | 7 | 7 | 7 | 7 |
| | | TAKENATE D-110N | 21 | 21 | 21 | 21 | 21 | 21 | 21 |
| | | Ethyl acetate | 7 | 7 | 7 | 7 | 7 | 7 | 7 |
| | | Total | 35 | 35 | 35 | 35 | 35 | 35 | 35 |

[Table 4]

| Table 4 | | | Example 8 | Example 9 | Example 10 | Example 11 | Example 12 | Example 13 |
|---|---|---|---|---|---|---|---|---|
| | | | Vinyl chloride vinyl acetate/ urethane | Vinyl chloride vinyl acetate/ urethane | Vinyl chloride vinyl acetate/ urethane | Vinyl chloride vinyl acetate/ urethane | Vinyl chloride vinyl acetate/ urethane | Vinyl chloride vinyl acetate/ urethane |
| Printing layer | Printing ink composition (A) | Titanium oxide pigment | 35 | 35 | 35 | 35 | 35 | 35 |
| | | Isopropyl alcohol | 13.5 | 13.5 | 13.5 | 13.5 | 13.5 | 13.5 |
| | | Ethyl acetate | 41.7 | 41.7 | 41.7 | 41.7 | 41.7 | 41.7 |
| | | Vinyl chloride vinyl acetate copolymer resin (A2) | 1 | 1 | 1 | 1 | 1 | 1 |
| | | Urethane resin (A1) | 8 | 8 | 8 | 8 | 8 | 8 |
| | | Styrene maleic acid resin | 0.8 | 0.8 | 0.8 | 0.8 | 0.8 | 0.8 |
| | | Total | 100 | 100 | 100 | 100 | 100 | 100 |
| | NCO curing agent | HDI adduct | 0 | 0 | 0 | 0 | 0 | 0 |

(continued)

| Table 4 | | | Example 8 | Example 9 | Example 10 | Example 11 | Example 12 | Example 13 |
|---|---|---|---|---|---|---|---|---|
| | | | Vinyl chloride vinyl acetate/ urethane | Vinyl chloride vinyl acetate/ urethane | Vinyl chloride vinyl acetate/ urethane | Vinyl chloride vinyl acetate/ urethane | Vinyl chloride vinyl acetate/ urethane | Vinyl chloride vinyl acetate/ urethane |
| Adhesive layer | Polyol (B1) | EGOPA 900 | 50 | | | | | 50 |
| | | EGOPA 1100 | | 50 | | | | |
| | | EGOPA 1300 | | | 50 | | | |
| | | EGOPA 2100 | | | | 50 | | |
| | | EGOPA 2500 | | | | | 50 | |
| | | HM6025 | 20 | 20 | 20 | 20 | 20 | 0 |
| | | Ethyl acetate | 30 | 30 | 30 | 30 | 30 | 50 |
| | | Total | 100 | 100 | 100 | 100 | 100 | 100 |
| | NCO compound (B2) | TAKENATE 500 | 7 | 7 | 7 | 7 | 7 | 7 |
| | | TAKENATE D-110N | 21 | 21 | 21 | 21 | 21 | 21 |
| | | Ethyl acetate | 7 | 7 | 7 | 7 | 7 | 7 |
| | | Total | 35 | 35 | 35 | 35 | 35 | 35 |

[Table 5]

| Table 5 | | | Comparative Example 1 | Comparative Example 2 | Comparative Example 3 | Comparative Example 4 | Comparative Example 5 | Comparative Example 6 |
|---|---|---|---|---|---|---|---|---|
| | | | Nitrocellulo se based | Nitrocellulo se based | Nitrocellulo se based | Nitrocellulo se based | Nitrocellulo se based | Nitrocellulo se based |
| Printing layer | Printing ink composition (A) | Titanium oxide pigment | 35 | 35 | 35 | 35 | 35 | 35 |
| | | Nitrocellulose resin | 15 | 15 | 15 | 15 | 15 | 15 |
| | | ethoxypropanol | 15 | 15 | 15 | 15 | 15 | 15 |
| | | 1-propanol | 15 | 15 | 15 | 15 | 15 | 15 |
| | | Ethanol | 20 | 20 | 20 | 20 | 20 | 20 |
| | | Total | 100 | 100 | 100 | 100 | 100 | 100 |
| Adhesive layer | Polyol (B1) | EGOPA 900 | 50 | | | | | 50 |
| | | EGOPA 1100 | | 50 | | | | |
| | | EGOPA 1300 | | | 50 | | | |
| | | EGOPA 2100 | | | | 50 | | |
| | | EGOPA 2500 | | | | | 50 | |
| | | HM6025 | 20 | 20 | 20 | 20 | 20 | 0 |
| | | Ethyl acetate | 30 | 30 | 30 | 30 | 30 | 50 |
| | | Total | 100 | 100 | 100 | 100 | 100 | 100 |
| | NCO compound (B2) | TAKENATE 500 | 7 | 7 | 7 | 7 | 7 | 7 |
| | | TAKENATE D-110N | 21 | 21 | 21 | 21 | 21 | 21 |
| | | Ethyl acetate | 7 | 7 | 7 | 7 | 7 | 7 |
| | | Total | 35 | 35 | 35 | 35 | 35 | 35 |

In the tables, abbreviation and the name of raw materials used are shown below.

Titanium oxide pigment: R-780 manufactured by Ishihara Sangyo Kaisha, Ltd.
Vinyl chloride vinyl acetate copolymer resin (A2): UMOH manufactured by Wuxi Honghui Resin
Styrene maleic acid resin: High loss X-228 manufactured by Seiko PMC Corporation, solution having a concentration of ethyl acetate of 10%
NCO: isocyanate
Isocyanate curing agent: ethyl acetate solution of HDI (hexamethylene diisocyanate) adduct
HM6025: manufactured by Henghao Technology Co., Ltd. mica/non-expansiveness, plate-shaped, average particle diameter of 10 μm, aspect ratio equal to or greater than 100
TAKENATE 500: isocyanate compound manufactured by Mitsui Chemicals, Inc.
TAKENATE D-110N: isocyanate compound manufactured by Mitsui Chemicals, Inc.

<Evaluation>

Regarding the laminates of Examples 1 to 13 and Comparative Examples 1 to 6, the evaluations were performed as follows and effects were collectively shown in Tables 5 and 6.

(Initial Stickiness)

The initial stickiness indicates viscosity of the adhesive immediately after performing the laminate process. In a case where the initial stickiness is poor, power of preventing a contracting force of a film which is bonded while being forcibly extended due to drier heat or high tension is weak, and thus, the bonded film is shifted, a tunneling phenomenon of wrinkles formed on the laminate film occurs, and this causes a problem in workability. In order to evaluate the initial stickiness, a laminate of a combination of PET/CPP obtained in the examples and comparative examples in which lamination was performed, was cut to have a width of 15 mm immediately after the bonding, an atmosphere temperature was set as 25°C and a peeling speed was set as 100 mm/min by using a Tensilon universal testing machine, the initial stickiness was measured by the peeling strength in a case of the peeling by a T type peeling method, and the evaluation was performed in five stages as follows. A unit of the strength was set as N/15 mm.

Evaluation 5: peeling strength is equal to or greater than 1.0 N/15 mm
Evaluation 4: peeling strength is equal to or greater than 0.75 N/15 mm and smaller than 1 N/15 mm
Evaluation 3: peeling strength is equal to or greater than 0.50 N/15 mm and smaller than 0.75 N/15 mm
Evaluation 2: peeling strength is equal to or greater than 0.25 N/15 mm and smaller than 0.50 N/15 mm
Evaluation 1: peeling strength is smaller than 0.25 N/15 mm

(Ink Remelting Properties)

In the laminate, a rear side of the film is generally printed, and thus, the printing ink layer and the adhesive layer are directly in contact. The adhesive penetrates the ink layer immediately after the coating and a part thereof is melted and mixed therewith, depending on the adhesive, and thus, an actual layer thickness of the ink layer and the adhesive layer decreases, and poor appearance of the printed design occurs depending on the state. This phenomenon is referred to as the remelting of the ink. In order to evaluate this, the following method was performed.

A cross sectional adjustment was performed regarding the laminate of a combination of PET/CPP of the examples and the comparative examples by a cryomicrotome (-100°C, glass blade), and SEM observation was performed. From results of the cross section observation, a thickness of the adhesive layer of each of an unfigured portion (portion where the printing layer was not formed) and a printing portion (portion where the printing layer was formed) was measured and the following calculation was performed.

$$\text{(Adhesive layer residual ratio)} = \text{(thickness of adhesive layer of printing portion)/)(thickness of adhesive layer of the unfigured portion)} \times 100\ [\%]$$

The laminate having a high adhesive layer residual ratio is set as the laminate in which the remelting of the ink hardly occurs, and the laminate having a low residual ratio is set as the laminate in which the remelting easily occurs, and evaluation was performed with five stages as described below.

Evaluation 5: Adhesive layer residual ratio is 90% to 100%.
Evaluation 4: Adhesive layer residual ratio is equal to or greater than 80% and smaller than 90%.
Evaluation 3: Adhesive layer residual ratio is equal to or greater than 70% and smaller than 80%.
Evaluation 2: Adhesive layer residual ratio is equal to or greater than 60% and smaller than 70%
Evaluation 1: Adhesive layer residual ratio is smaller than 60%

(Oxygen Barrier Properties)

The oxygen barrier properties here are performance showing difficulties of penetration of oxygen molecules in the atmosphere into the package. Specifically, in a case where the laminate film is PET/CPP, the oxygen barrier properties are expressed as the amount of oxygen which penetrates from the surface of the PET, is transmitted through the laminate film layer for a unit time in a unit area, and comes out from the surface of CPP, a so-called oxygen transmittance. Accordingly, as this value is small, it is possible to determine that the oxygen barrier properties are excellent.

Regarding the laminate of a combination of PET/CPP and a combination of PET/VMCPP of the examples and the comparative examples, measurement was performed by using an oxygen transmittance measurement device OX-TRAN2/21 manufactured by MOCON under the atmosphere at 23°C and 90%RH. The measurement unit was set as cc/$m^2$/day.

[Table 6]

| Table 6 | | | Example 1 | Example 2 | Example 3 | Example 4 | Example 5 | Example 6 | Example 7 |
|---|---|---|---|---|---|---|---|---|---|
| Evaluation | Initial stickiness | | 5 | 5 | 5 | 4 | 4 | 3 | 5 |
| | Ink remelting properties | | 3 | 4 | 5 | 5 | 5 | 5 | 3 |
| | Oxygen barrier properties | PET/CPP | 15cc | 14cc | 12cc | 15cc | 17cc | 20cc | 60cc |
| | | PET/VMCPP | 1.0cc | 1.0cc | 1.0cc | 1.0cc | 1.1cc | 1.2cc | 1.2cc |

[Table 7]

| Table 7 | | | Example 8 | Example 9 | Example 10 | Example 11 | Example 12 | Example 13 |
|---|---|---|---|---|---|---|---|---|
| Evaluation | Initial stickiness | | 5 | 4 | 4 | 3 | 2 | 5 |
| | Ink remelting properties | | 2 | 3 | 3 | 4 | 5 | 2 |
| | Oxygen barrier properties | PET/CPP | 25cc | 30cc | 32cc | 35cc | 40cc | 60cc |
| | | PET/ VMCPP | 1.2cc | 1.2cc | 1.2cc | 1.3cc | 1.3cc | 1.4cc |

[Table 8]

| Table 8 | | | Comparative Example 1 | Comparative Example 2 | Comparative Example 3 | Comparative Example 4 | Comparative Example 5 | Comparative Example 6 |
|---|---|---|---|---|---|---|---|---|
| Evaluation | Initial stickiness | | 5 | 4 | 4 | 3 | 2 | 5 |
| | Ink remelting properties | | 1 | 2 | 2 | 3 | 5 | 1 |
| | Oxygen barrier properties | PET/CPP | 40cc | 50cc | 50cc | 50cc | 50cc | 100cc |
| | | PET/ VMCPP | 1.5cc | 2.1cc | 2.4cc | 2.8cc | 3.1cc | 1.8cc |

As shown in the examples and the comparative examples, since the printing layer of the laminate of the invention is formed by the printing ink composition (A) including the urethane resin (Al) and the vinyl chloride vinyl acetate copolymer resin (A2), excellent oxygen barrier properties are obtained, in a case of using the two-component polyurethane-based adhesive (B) including the polyol (Bl) having a number average molecular weight equal to or smaller than 2,300 and the isocyanate compound (B2), having gas barrier properties. Even in a case where the ink remelting properties are deteriorated, a certain degree of oxygen barrier properties can be maintained. Particularly, in a case of using a combination of PET/VMCPP as the base materials or in a case of using the isocyanate curing agent in combination with the printing ink composition (A), excellent barrier properties can be maintained.

On the other hand, in the laminate of the comparative examples, the printing ink including a nitrocellulose resin is used as the printing layer, and barrier properties could not be obtained, regardless of the evaluation of the ink remelting properties. Particularly, in the laminate of Comparative Example 5, remelting is prevented, but wettability to the film during the adhesive coating or crushing at the time of nipping is deteriorated, it is difficult to form a uniform adhesive coating film, and thus, barrier properties are deteriorated and sufficient oxygen barrier properties could not be obtained.

## Claims

**1.** A laminate comprising:

a first base material;
a second base material;
a printing layer provided on a surface of the first base material on a side of the second base material; and
an adhesive layer which is disposed between the printing layer and the second base material and bonds the first base material and the second base material to each other,
wherein the printing layer is formed of a printing ink composition (A) comprising a urethane resin (Al) and a vinyl chloride vinyl acetate copolymer resin (A2) as binders, the content of the urethane resin (Al) being 4% by mass to 25% by mass with respect to the total weight of the printing ink composition (A), and the content of the vinyl chloride vinyl acetate copolymer resin (A2) being 0.1% by mass to 5.0% by mass with respect to the total amount of the binder, and
the adhesive layer is formed by applying a two-component polyurethane-based adhesive (B) comprising a polyol (B1) having a number average molecular weight equal to or smaller than 2,300 and having a permachor value of 44 to 60 per 1 mol of residues excluding terminal hydroxyl groups, and an isocyanate compound (B2) .

**2.** The laminate according to claim 1,
wherein the polyol (B1) is amorphous.

**3.** The laminate according to any one of claims 1 or 2,
wherein a main skeleton of the polyol (Bl) has a polyester, polyester polyurethane, polyether, or polyether polyurethane structure.

**4.** The laminate according to any one of claims 1 to 3,
wherein the polyol (B1) has an ortho-oriented aromatic ring.

**5.** The laminate according to any one of claims 1 to 4,
wherein the polyol (Bl) is a polyester polyol (B1-1) that is a polycondensate between a polycarboxylic acid component including at least one of an aromatic dicarboxylic acid or an anhydride thereof and a polyhydric alcohol component including at least one selected from the group consisting of ethylene glycol, propylene glycol, butylene glycol, neopentyl glycol, and cyclohexanedimethanol.

**6.** The laminate according to claim 5,
wherein the polycarboxylic acid component comprises 70% to 100% by mass of an ortho-oriented aromatic dicarboxylic acid or an anhydride thereof.

**7.** The laminate according to any one of claims 1 to 6,
wherein the adhesive layer contains a plate-shaped inorganic compound.

**8.** The laminate according to any one of claims 1 to 7,
wherein the printing layer is a layer obtained by curing the printing ink composition (A) with an isocyanate curing

agent including an isocyanate compound.

9. The laminate according to any one of claims 1 to 8, wherein the binder comprises a styrene maleic acid resin.

10. A method for manufacturing a laminate, comprising:

a step of forming a printing layer on a first base material by using a printing ink composition (A) comprising a urethane resin (Al) and a vinyl chloride vinyl acetate copolymer resin (A2) as binders, the content of the urethane resin (A1) being 4% by mass to 25% by mass with respect to the total weight of the printing ink composition (A), and the content of the vinyl chloride vinyl acetate copolymer resin (A2) being 0.1% by mass to 5.0% by mass with respect to the total amount of the binder;
a step of applying, onto the printing layer, a two-component polyurethane-based adhesive (B) comprising a polyol (B1) having a number average molecular weight equal to or smaller than 2,300 and having a permachor value of 44 to 60 per 1 mol of residues excluding terminal hydroxyl groups, and an isocyanate compound (B2); and
a step of bonding the first base material and the second base material together with the two-component polyurethane-based adhesive (B).

## Patentansprüche

1. Laminat, umfassend:

ein erstes Basismaterial;
ein zweites Basismaterial;
eine Druckschicht, die auf der Oberfläche des ersten Basismaterials auf einer Seite des zweiten Basismaterials vorgesehen ist; und
eine Klebeschicht, welche angeordnet ist zwischen der Druckschicht und dem zweiten Basismaterial und die das erste Basismaterial und das zweite Basismaterial aneinander bindet,
wobei die Druckschicht gebildet ist aus einer Druckfarbenzusammensetzung (A), umfassend ein Urethanharz (A1) und ein Vinylchlorid-Vinylacetat-Copolymerharz (A2) als Bindemittel, wobei der Gehalt des Urethanharzes (A1) 4 Masse% bis 25 Masse% beträgt, bezogen auf das Gesamtgewicht der Druckfarbenzusammensetzung (A), und wobei der Gehalt des Vinylchlorid-Vinylacetat-Copolymerharzes (A2) 0,1 Masse% bis 5,0 Masse%, bezogen auf das Gesamtgewicht des Bindemittels, beträgt, und
wobei die Klebeschicht gebildet ist durch Aufbringen eines Zweikomponentenklebstoffs auf Polyurethanbasis (B), umfassend ein Polyol (B1) mit einem zahlenmittleren Molekulargewicht von 2.300 oder weniger und mit einem Permachor-Wert von 44 bis 60 pro 1 mol von Resten ausschließlich terminaler Hydroxylgruppen, und eine Isocyanatverbindung (B2).

2. Laminat nach Anspruch 1, wobei das Polyol (B1) amorph ist.

3. Laminat nach einem der Ansprüche 1 oder 2, wobei ein Hauptgerüst des Polyols (B1) eine Polyester-, Polyester-Polyurethan-, Polyether- oder Polyether-Polyurethan-Struktur aufweist.

4. Laminat nach einem der Ansprüche 1 bis 3, wobei das Polyol (B1) einen ortho-orientierten aromatischen Ring aufweist.

5. Laminat nach einem der Ansprüche 1 bis 4, wobei gilt: das Polyol (B1) ist ein Polyesterpolyol (B1-1), welches ein Polykondensat ist zwischen einer Polycarbonsäurekomponente, einschließlich mindestens eines von einer aromatischer Dicarbonsäure oder einem Anhydrid davon und einer mehrwertigen Alkoholkomponente, einschließlich mindestens eines ausgewählt aus der Gruppe, bestehend aus Ethylenglykol, Propylenglykol, Butylenglykol, Neopentylglykol, und Cyclohexandimethanol.

6. Laminat nach Anspruch 5, wobei die Polycarbonsäurekomponente 70 bis 100 Masse% einer ortho-orientierten aromatischen Dicarbonsäure oder eines Anhydrids davon umfasst.

**7.** Laminat nach einem der Ansprüche 1 bis 6, wobei die Klebeschicht eine plattenförmige anorganische Verbindung enthält.

**8.** Laminat nach einem der Ansprüche 1 bis 7, wobei die Druckschicht eine Schicht ist, die erhalten wird durch Härten der Druckfarbenzusammensetzung (A) mit einem Isocyanathärtungsmittel enthaltend eine Isocyanatverbindung.

**9.** Laminat nach einem der Ansprüche 1 bis 8, wobei das Bindemittel ein Styrol-Maleinsäure-Harz umfasst.

**10.** Verfahren zur Herstellung eines Laminats, umfassend:

eine Stufe des Bildens einer Druckschicht auf einem ersten Basismaterial durch Verwenden einer Druckfarbenzusammensetzung (A), umfassend ein Urethanharz (A1) und ein Vinylchlorid-Vinylacetat-Copolymerharz (A2) als Bindemittel, wobei der Gehalt des Urethanharzes (A1) 4 Masse% bis 25 Masse%, bezogen auf das Gesamtgewicht der Druckfarbenzusammensetzung (A) beträgt und der Gehalt des Vinylchlorid-Vinylacetat-Copolymerharzes (A2) 0,1 Masse% bis 5,0 Masse%, bezogen auf das Gesamtgewicht des Bindemittels, beträgt;
eine Stufe des Aufbringens auf die Druckschicht eines Zweikomponentenklebstoffs auf Polyurethanbasis (B), umfassend ein Polyol (B1) mit einem zahlenmittleren Molekulargewicht von 2.300 oder weniger und mit einem Permachor-Wert von 44 bis 60 pro 1 mol von Resten ausschließlich terminaler Hydroxylgruppen, und einer Isocyanatverbindung (B2); und
eine Stufe des Verbindens des ersten Basismaterials und des zweiten Basismaterials miteinander mit dem Zweikomponentenklebstoff auf Polyurethanbasis (B).

## Revendications

**1.** Stratifié comprenant :

un premier matériau de base ;
un second matériau de base ;
une couche d'impression fournie sur une surface du premier matériau de base sur un côté du second matériau de base ; et
une couche adhésive qui est disposée entre la couche d'impression et le second matériau de base et lie le premier matériau de base et le second matériau de base l'un à l'autre,
dans lequel la couche d'impression est formée d'une composition d'encre d'impression (A) comprenant une résine d'uréthane (A1) et une résine de copolymère de chlorure de vinyle acétate de vinyle (A2) comme liants, la teneur de la résine d'uréthane (A1) étant de 4 % en masse à 25 % en masse par rapport à la masse totale de la composition d'encre d'impression (A), et la teneur de la résine de copolymère de chlorure de vinyle acétate de vinyle (A2) étant de 0,1 % en masse à 5,0 % en masse par rapport à la quantité totale du liant, et
la couche adhésive est formée par application d'un adhésif à base de polyuréthane biconstituant (B) comprenant un polyol (B1) ayant une masse moléculaire moyenne en nombre inférieure ou égale à 2 300 et ayant une valeur Permachor de 44 à 60 pour 1 mole de résidus excluant des groupes hydroxyle terminaux, et un composé isocyanate (B2).

**2.** Stratifié selon la revendication 1,
dans lequel le polyol (B1) est amorphe.

**3.** Stratifié selon l'une quelconque des revendications 1 ou 2,
dans lequel un squelette principal du polyol (B1) présente une structure polyester, polyester polyuréthane, polyéther, ou une structure polyéther polyuréthane.

**4.** Stratifié selon l'une quelconque des revendications 1 à 3,
dans lequel le polyol (B1) présente un noyau aromatique ortho-orienté.

**5.** Stratifié selon l'une quelconque des revendications 1 à 4,
dans lequel le polyol (B1) est un polyester polyol (B1-1) qui est un polycondensat entre un constituant acide polycarboxylique incluant au moins un d'un acide dicarboxylique aromatique ou d'un anhydride de celui-ci et un constituant alcool polyvalent incluant au moins un choisi dans le groupe consistant en éthylène glycol, propylène glycol, butylène glycol, néopentyl glycol, et cyclohexanediméthanol.

**6.** Stratifié selon la revendication 5,
dans lequel le constituant acide polycarboxylique comprend de 70 % à 100 % en masse d'un acide dicarboxylique aromatique ortho-orienté ou d'un anhydride de celui-ci.

**7.** Stratifié selon l'une quelconque des revendications 1 à 6, dans lequel la couche adhésive contient un composé inorganique en forme de plaque.

**8.** Stratifié selon l'une quelconque des revendications 1 à 7,
dans lequel la couche d'impression est une couche obtenue par durcissement de la composition d'encre d'impression (A) avec un agent durcissant d'isocyanate incluant un composé isocyanate.

**9.** Stratifié selon l'une quelconque des revendications 1 à 8,
dans lequel le liant comprend une résine de styrène acide maléique.

**10.** Procédé de fabrication d'un stratifié, comprenant :

une étape de formation d'une couche d'impression sur un premier matériau de base en utilisant une composition d'encre d'impression (A) comprenant une résine d'uréthane (A1) et une résine de copolymère de chlorure de vinyle acétate de vinyle (A2) comme liants, la teneur de la résine d'uréthane (A1) étant de 4 % en masse à 25 % en masse par rapport à la masse totale de la composition d'encre d'impression (A), et la teneur de la résine de copolymère de chlorure de vinyle acétate de vinyle (A2) étant de 0,1 % en masse à 5,0 % en masse par rapport à la quantité totale du liant ;
une étape d'application, sur la couche d'impression, d'un adhésif à base de polyuréthane biconstituant (B) comprenant un polyol (B1) ayant une masse moléculaire moyenne en nombre inférieure ou égale à 2 300 et ayant une valeur Permachor de 44 à 60 pour 1 mole de résidus excluant des groupes hydroxyle terminaux, et un composé isocyanate (B2) ; et
une étape de liaison du premier matériau de base et du second matériau de base ensemble avec l'adhésif à base de polyuréthane biconstituant (B).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001270026 A
- JP 2015137138 A
- JP 2015016657 A
- EP 2749621 A1
- US 2010247876 A1
- JP 2014004799 A
- JP 2004238050 A
- JP 5975189 B